# NEUE EUROPÄISCHE PATENTSCHRIFT

(11) **EP 2 695 269 B2**
(45) Veröffentlichungstag und Bekanntmachung des Hinweises auf die Entscheidung über den Einspruch: **25.10.2017**
(45) Hinweis auf die Patenterteilung: 24.09.2014
(21) Anmeldenummer: 12713723.0
(22) Anmeldetag: 10.04.2012
(51) Int. Cl.: H02J 1/14, H02J 3/28

(54) **OPTIMIERTES LASTMANAGEMENT**
OPTIMIZED LOAD MANAGEMENT
GESTION OPTIMISÉE DE CHARGE

(30) Priorität: 08.04.2011 DE 102011001918
(43) Veröffentlichungstag der Anmeldung: 12.02.2014
(73) Patentinhaber: SMA Solar Technology AG, 34266 Niestetal (DE)
(72) Erfinder: MAGNUSSEN, Björn, 34131 Kassel (DE); HÖHLE, Christian, 33181 Fürstenberg (DE); THIEL, Raimund, 34596 Bad Zwesten (DE)
(74) Vertreter: Lahnor, Peter
(86) Internationale Anmeldenummer: PCT/EP2012/056391
(87) Internationale Veröffentlichungsnummer: WO 2012/136836

(56) Entgegenhaltungen:
- EP-A2- 2 200 143
- EP-A2- 2 355 294
- WO-A2-2012//171592
- DE-A1-102008 037 575
- DE-A1-102009 010 117

## Beschreibung

### TECHNISCHES GEBIET DER ERFINDUNG

Die Erfindung bezieht sich auf ein Verfahren zum Optimieren eines zeitlichen Verlaufs eines Verbrauchs von elektrischer Leistung durch eine Gruppe von unterschiedlichen Verbrauchern im Hinblick auf ein Angebot an elektrischer Leistung, das elektrische Leistung von mindestens einem Wind- oder Solarstromgenerator sowie Leistung umfasst die bidirektional mit einem Speicher für elektrische Energie und/oder einem öffentlichem Stromnetz ausgetauscht wird.

Die unterschiedlichen Verbrauchern und der mindestens eine Wind- oder Solarstromgenerator sind typischerweise in einem lokalen Stromnetz angeordnet. Dieses lokale Stromnetz kann sowohl ein Inselnetz sein als auch über eine Verbindung zu einem öffentlichen Stromnetz verfügen.

### STAND DER TECHNIK

Elektrische Leistung von Solar- und Windstromgeneratoren steht nicht immer dann zur Verfügung, wenn in einem öffentlichen Stromnetz, in das die Stromgeneratoren einspeisen, ein Bedarf an elektrischer Leistung vorliegt. Vielmehr kann die Bereitstellung großer elektrischer Leistung durch die Stromgeneratoren, zum Beispiel durch Solarstromgeneratoren in der Mittagszeit, mit einem in dem angeschlossenen öffentlichen Stromnetz bereits vorhandenen Überangebot an elektrischer Leistung zusammenfallen. Dies kann dazu führen, dass die Stromgeneratoren abgeregelt werden müssen und so elektrische Leistung verloren geht, die ohne zusätzlichen Aufwand verfügbar wäre.

Wenn in einem lokalen Stromnetz mit einem Stromgenerator zu einem Zeitpunkt mehr elektrische Leistung erzeugt als verbraucht wird und die überschüssige elektrische Leistung in ein öffentliches Stromnetz eingespeist wird, während zu einem anderen Zeitpunkt mehr elektrische Leistung verbraucht als erzeugt wird und die fehlende elektrische Leistung aus dem öffentlichen Stromnetz bezogen wird, dient das öffentliche Stromnetz im Wesentlichen nur als Puffer für die elektrische Leistung. Hierdurch fällt für den Betreiber des öffentlichen Stromnetzes ein erheblicher Aufwand an, den er anhaltend nicht ohne Forderung nach Vergütung erbringen wird.

Ganz grundsätzlich ist es mittlerweile so, dass die Bezugspreise für elektrische Energie extrem von dem Zeitpunkt abhängen, zu dem der Bezug der elektrischen Energie erfolgt. Vom Bezugzeitpunkt abhängige Stromtarife werden daher zunehmend auch Privatverbrauchern angeboten werden.

Vor diesem Hintergrund ist ein hinsichtlich des momentanen Angebots an elektrischer Leistung optimiertes Lastmanagement anzustreben, das die Ziele eines hohen Eigenverbrauchs von elektrischer Leistung am Ort ihrer Erzeugung durch Solar- und Windgeneratoren unter minimaler Beanspruchung eines angeschlossenen öffentlichen Stromnetzes erreicht.

Ein Verfahren mit den Merkmalen des Oberbegriffs des unabhängigen Patentanspruchs 1 ist aus der DE 10 2008 037 575 A1 bekannt. Mittels eines computergestützten Verfahrens wird die Nutzung von Energie-Verbrauchern und Energie-Quellen eines dezentralen Systems überwacht, gesteuert und optimiert. Zu den Energie-Quellen des dezentralen Systems zählen Solar- und/oder Windkraftgeneratoren als stationäre Energie-Quellen. Teil des computergestützten Verfahrens ist die Erstellung eines Plans für eine optimierte Energienutzung im System auf der Grundlage von Informationen, die den voraussichtlichen Gesamtenergieverbrauch und die durch die stationären Energie-Quellen bereitgestellte Energie zu zukünftigen Zeitpunkten umfassen. Der voraussichtliche Gesamtenergieverbrauch zu den zukünftigen Zeitpunkten wird aus dem gemessenen Energieverbrauch eines oder mehrerer der Energie-Verbraucher berechnet. Bei der Berechnung der Energie, die von den stationären Energie-Quellen zu den zukünftigen Zeitpunkten zur Verfügung gestellt wird, werden die voraussichtlichen Umweltbedingungen zu diesen Zeitpunkten berücksichtigt. In den Abbildungen der DE 10 2008 037 575 A1 ist der Energieverbrauch in Energieblöcken von 40 Minuten Dauer aufgetragen, wobei sich der Energieverbrauch frühestens nach jeweils 2 Stunden ändert.

Ein Verfahren zum Optimieren eines zeitlichen Verlaufs eines Verbrauchs von elektrischer Leistung durch eine Gruppe von unterschiedlichen Verbrauchern im Hinblick auf ein Angebot an elektrischer Leistung, das elektrische Leistung von mindestens einem Wind- oder Solarstromgenerator umfasst, ist auch aus der DE 10 2009 010 117 A1 bekannt. Ziel ist hier eine Vergleichmäßigung der Bezugsleistung von elektrischer Energie durch eine Gruppe von unterschiedlichen Verbrauchern. In einem ersten Schritt wird über einen definierbaren Zeitraum mit Kalenderbezug ein ungesteuerter Verbrauch an Leistung ermittelt. In einem zweiten Schritt wird aus diesem ungesteuerten Verbrauch an Leistung ein Mittelwert gebildet, der während eines gleichartigen nachfolgenden Zeitraums als Vorgabe für einen Sollwert benutzt wird. Den Verbrauchern werden unterschiedliche Prioritäten zugeordnet, und sie werden gemäß ihrer Priorität geschaltet, um mit der von ihnen aktuell insgesamt verbrauchten elektrischen Leistung den Sollwert nicht zu überfahren. Mit diesem Verfahren kann der Bezug von elektrischer Energie vergleichmäßigt werden, was in Abhängigkeit von tariflichen Randbedingungen auch zu wirtschaftlichen Vorteilen für den Betreiber des lokalen Netzwerks führen kann. Bei dem bekannten Verfahren werden auch maximale Abschaltzeiten einzelner Verbraucher, wie beispielsweise einer Wärmepumpe zur Beheizung eines Gebäudes, erfasst. Wärme- oder Kälteerzeugende Verbraucher werden gezielt in Schwachlastzeiten betrieben, um Wärme bzw. Kälte für sich anschließende Starklastzeiten zu speichern, in denen diese Verbraucher möglichst nicht zusätzlich betrieben werden. Auch der Betrieb von Spül- oder Waschmaschinen soll möglichst während Schwachlastzeiten erfolgen. Derartigen Verbrauchern wird entsprechend eine niedrige Priorität zugeordnet. Verbraucher wie Lampen und Herde erhalten hingegen eine hohe Priorität, da ein Bedarf an Licht oder Kochenergie in extrem hohem Maße momentanen Bedürfnissen unterliegt. Weiter wird berücksichtigt, dass die von einzelnen Verbrauchern verbrauchte Leistung je nach Arbeitsfortschritt unterschiedlich ist. So wird zum Beispiel beim Einschalten einer Wachmaschine berücksichtigt, dass diese bis zu zwei Stunden in Betrieb sein kann. Dabei ist ihre benötigte Leistung, wenn sie zugelaufenes Wasser auf eine voreingestellte Waschtemperatur erwärmt, relativ hoch. Für das anschließende Bewegen der Waschtrommel wird dann relativ wenig Leistung benötigt. Der aktuelle Verbrauch an elektrischer Leistung wird bei dem bekannten Verfahren in Abständen von 1, 3 oder maximal 5 Minuten gemessen, wobei diese Zeitwerte auf eine Verrechnungsperiode von 15 Minuten abgestimmt sind, für die jeweils ein mittlerer Verbrauchswert an den Betreiber eines angeschlossenen öffentlichen Stromnetzes übermittelt wird. Bei dem bekannten Verfahren wird eine Eigenerzeugung von Strom durch Solar- oder Windstromgeneratoren berücksichtigt. Ist dabei die eigenerzeugte Leistung höher als die verbrauchte Leistung, wird Leistung in das angeschlossene öffentliche Stromnetz eingespeist. Umgekehrt wird Leistung aus dem öffentlichen Stromnetz bezogen.

Aus der DE 44 25 876 A1 ist eine sogenannte intelligente Steckdose bekannt, die zum Anschluss elektrischer Verbraucher vorgesehen ist. Dabei werden die Verbraucher über ein BUS-System, welches das Starkstromnetz als Übertragungsmedium nutzt, gesteuert, d. h. eingeschaltet, abgeschaltet und/oder gedimmt. Über einen zusätzlichen Schnittstellenanschluss können Sensoren an die Steckdose angeschlossen und über das BUS-System abgefragt werden.

Aus der DE 20 2008 009 128 U1 ist eine Analysevorrichtung für Stromverbraucher bekannt, bei der jeder Stromverbraucher eine Einheit umfasst, die geeignet ist, den Stromverbrauch und/oder Leistungsverbrauch genau dieses einen Verbrauchers zu identifizieren und als Information bereitzustellen. Die Analysevorrichtung weist eine Empfangsstelle für diese, durch die Stromverbraucher bereitgestellten Informationen auf, wobei diese Empfangsstelle geeignet ist, bei Zuschalten und/oder Ausschalten eines jeden einzelnen der Stromverbraucher Informationen von einem jeden einzelnen dieser Stromverbraucher getrennt aufzunehmen und/oder getrennt zu verarbeiten und/oder mit Hilfe vorgegebener Algorithmen zu verrechnen. Die Informationsübertragung erfolgt mit Hilfe der Stromversorgungsleitung mit mehr als 50 Hz, vorzugsweise mit mehr als 100 Hz, d. h. mit mehr als 50 b/s bzw. mehr als 100 b/s. Die Analysevorrichtung kann jeden individuellen Stromverbrauch eines Stromverbrauchers ermitteln und ausgeben und die Energiezufuhr zu diesem Stromverbraucher reduzieren oder ihn an- und ausschalten. Die individuelle Identifizierbarkeit der einzelnen Verbraucher wird bei der bekannten Analysevorrichtung mit Hilfe ihres individuellen Verbrauchsverhaltens erreicht. So weisen induktive und kapazitive Verbrauchsmuster eines jeden Verbrauchers im übertragenen Sinn die Eigenschaft eines Fingerabdrucks auf. Dieser "elektrische Fingerabdruck" besteht aus einem Einschaltstromstoß und durch ihn im Hausstromnetz eingeprägte Oberwellen. Werden diese analysiert, kann durch deren eigentümliche Zusammensetzung auf den verursachenden Verbraucher rückgeschlossen werden. Durch eine Identifikation des Charakters dieses individuellen Verbrauchsverhaltens des jeweiligen Verbrauchers ist so einerseits dessen Identifizierung möglich und andererseits ist es möglich, wenn man diesen individuellen Verbrauchswert und mit einem hinterlegten Normwert oder mit einem tolerierten Normwertebereich vergleicht, Aussagen über einen jeden individuellen Verbraucher zu tätigen.

### AUFGABE DER ERFINDUNG

Der Erfindung liegt die Aufgabe zugrunde, ein Verfahren zum Optimieren eines zeitlichen Verlaufs eines Verbrauchs von elektrischer Leistung durch eine Gruppe von unterschiedlichen Verbrauchern im Hinblick auf ein Angebot an elektrischer Leistung, das elektrische Leistung von mindestens einem Wind- oder Solarstromgenerator sowie Leistung umfasst, die bidirektional mit einem Speicher für elektrische Energie und/oder einem öffentlichem Stromnetz ausgetauscht wird, aufzuzeigen, mit dem ein Verbrauch der elektrischen Leistung den unterschiedlichen Wünschen eines Benutzers der Verbraucher entsprechend, aber doch immer in technisch definierter Weise optimiert wird. Diese Optimierung kann eine Optimierung eines Eigenverbrauchs der elektrischen Leistung von dem Stromgenerator sein, so dass ein angeschlossenes öffentliches Stromnetz allenfalls minimal belastet und im Idealfall gar nicht benötigt wird. Die Optimierung kann alternativ oder zusätzlich auch in Hinblick auf ein oder mehrere andere Kriterien erfolgen, wie beispielweise maximale Nutzung von elektrischer Leistung aus regenerativen Energiequellen, ökologisch sinnvoller Energieverbrauch, kostengünstige Energiebeschaffung.

### LÖSUNG

Die Aufgabe der Erfindung wird durch ein Verfahren mit den Merkmalen des unabhängigen Patentanspruchs 1 gelöst. Bevorzugte Ausführungsformen des neuen Verfahrens sind in den abhängigen Patentansprüchen definiert. Patentanspruch 15 betrifft eine Vorrichtung zur Umsetzung des neuen Verfahrens.

### BESCHREIBUNG DER ERFINDUNG

Bei dem neuen Verfahren zum Optimieren eines zeitlichen Verlaufs eines Verbrauchs von elektrischer Leistung durch eine Gruppe von unterschiedlichen Verbrauchern im Hinblick auf ein Angebot an elektrischer Leistung, das elektrische Leistung von mindestens einem Wind- oder Solarstromgenerator sowie Leistung umfasst, die bidirektional mit einem Speicher für elektrische Energie und/oder einem öffentlichem Stromnetz ausgetauscht wird, wird zunächst ein Verbrauch von elektrischer Leistung gemessen, um charakteristische zeitliche Verläufe des Verbrauchs von elektrischer Leistung durch die einzelnen Verbraucher zu ermitteln. Dann wird eine Prognose zum zeitlichen Verlauf des Angebots an elektrischer Leistung von dem mindestens einem Stromgenerator für einen in der Zukunft liegenden Zeitraum erstellt. Bei einem Stromgenerator in Form eines Solarstromgenerators wird der typische Zeitraum in der Zukunft ein Tag sein. Es kann sich aber auch um einen Teil eines Tages oder eine Mehrzahl von Tagen handeln.

Basierend auf den charakteristischen zeitlichen Verläufen des Verbrauchs von elektrischer Leistung durch die einzelnen Verbraucher, den Bedingungen des bidirektionalen Austausches elektrischer Leistung mit dem Energiespeicher und/oder dem öffentlichen Stromnetz sowie mindestens einer vom Benutzer der Verbraucher gesetzten Benutzerzielvorgabe, die zu einer unterschiedlichen Gewichtung des Verbrauchs von elektrischer Leistung durch unterschiedliche Verbraucher und/oder des Angebots von elektrischer Leistung aus unterschiedlichen Quellen in dem in der Zukunft liegenden Zeitraum führt, wird dann ein auf die Prognose abgestimmter Plan für die Zuteilung von elektrischer Leistung an die einzelnen Verbraucher über den in der Zukunft liegenden Zeitraum erstellt. Dieser Plan wird zusätzlich fortlaufend auf Basis eines tatsächlichen Angebots an elektrischer Leistung von dem mindestens einen Stromgenerator und eines tatsächlichen Verbrauchs von elektrischer Leistung aktualisiert.

Dem Plan folgend wird dann elektrische Leistung den einzelnen Verbrauchern zugeteilt. Diese Zuteilung entspricht einer Rationierung der elektrischen Leistung, die von den einzelnen Verbrauchern verbraucht werden kann. Diese Zuteilung kann binär, d.h. z.B. durch Ein- und Ausschalten der Stromzufuhr zu den einzelnen Verbrauchern in bestimmten Teilzeiträumen, erfolgen, wobei die tatsächlich von den einzelnen Verbrauchern bezogene Leistung durch die Verbraucher selbst bestimmt ist. Alternativ kann die Zuteilung zu den einzelnen Verbrauchern auch in ihrer Höhe begrenzt sein, so dass den einzelnen Verbrauchern nur eine begrenzte Leistung in bestimmten Teilzeiträumen zur Verfügung steht. Weiterhin können die Verbraucher dazu veranlasst werden, sich selbst in ihrer Leistung zu beschränken, sofern sie über dazu geeignete Kommunikations- und Steuereinrichtungen verfügen.

Um bei der Erstellung des Plans tatsächlich einen hohen Eigenverbrauch ohne notwendigen Rückgriff auf ein angeschlossenes öffentliches Stromnetz zu erreichen, wird der Verbrauch von elektrischer Leistung mit einer Abtastrate von mindestens 0,1 Hz gemessen. Dieser Verbrauch kann einen Gesamtverbrauch aller Verbraucher in einem lokalen Stromnetz und/oder für die einzelnen Verbraucher einzeln gemessene Verbräuche umfassen. Das heißt, mindestens ungefähr alle 10 Sekunden, vorzugsweise mindestens jede Sekunde, mehr bevorzugt mindestens jede zehntel Sekunde, noch mehr bevorzugt mindestens jede hundertstel Sekunde, d. h. einmal pro Halbwelle des üblichen 50 Hz Wechselstroms, wird ein Wert des Verbrauchs von elektrischer Leistung gemessen, um ihn bei der Ermittlung der charakteristischen zeitlichen Verläufe des Verbrauchs von elektrischer Leistung durch die einzelnen Verbraucher zu berücksichtigen. Dabei können die charakteristischen zeitlichen Verläufe des Verbrauchs von elektrischer Leistung durch die einzelnen Verbraucher aufgrund der hohen zeitlichen Auflösung der Messung schon aus dem Gesamtverbrauch ermittelt werden, ohne dass eine gesonderte Messung an den einzelnen Verbrauchern durchgeführt werden muss. Es versteht sich, dass mittels einer gesonderten Messung an den einzelnen Verbrauchern die Genauigkeit der charakteristischen Verbräuche weiter erhöht werden kann.

Damit kann der Plan für die Zuteilung von elektrischer Leistung an die einzelnen Verbraucher über den in der Zukunft liegenden Zeitraum mit einer dieser hohen Abtastrate entsprechenden zeitlichen Auflösung erstellt werden. Dies ist wiederum Voraussetzung dafür, dass auch höherfrequente charakteristische Schwankungen des Verbrauchs elektrischer Leistung durch die einzelnen Verbraucher in dem Plan Berücksichtigung finden können. Ohne diese Berücksichtigung schneller Schwankungen, d. h. wenn nur Mittelwerte über vergleichsweise lange Zeiträume gemessen und berücksichtigt werden, kann der Verbrauch der elektrischen Leistung durch die Gesamtheit der einzelnen Verbraucher kurzzeitig das Angebot an elektrischer Energie von dem Stromgenerator erheblich überschreiten, während er das Angebot im nächsten Moment nicht mehr ausschöpft. In der Folge tritt eine Oszillation von elektrischer Leistung zwischen dem lokalen Stromnetz und einem angeschlossenen öffentlichen Stromnetz auf, die dieses öffentliche Stromnetz erheblich belastet, obwohl ihm im Mittel gar keine Leistung entnommen wird.

Bei dem neuen Verfahren können auch noch schnellere Schwankungen des Verbrauchs von elektrischer Leistung durch die einzelnen Verbraucher berücksichtigt werden, als sie durch die begrenzte Abtastrate, mit der der Verbrauch von elektrischer Leistung durch die einzelnen Verbraucher gemessen wird, erfassbar sind. Dazu kann auf zusätzliche Informationen zu dem jeweiligen Verbraucher zurückgegriffen werden, der durch seinen bereits mit der Abtastrate erfassten charakteristischen Verbrauch identifiziert wurde. Diese Informationen können auf Basis des charakteristischen Verbrauchs und/oder eines vom Anwender eingegebenen, den Verbraucher identifizierenden Identifikationscode aus einer externen Datenbank abgerufen werden. Insbesondere können diese Informationen Histogramme umfassen, die die Häufigkeit bestimmter Momentanwerte der verbrauchten Leistung eines Verbrauchers mit den aufgrund der begrenzten Abtastrate gemessenen gemittelten Leistungen in Beziehung bringt. Damit kann dann aus den Messungen mit begrenzter Abtastrate auf das Vorhandensein von Leistungsspitzen geschlossen werden, die bei der Erstellung des Planes berücksichtigt werden können. Die Phase von auf diese Weise bekannten Schwankungen mit einer höheren Frequenz kann auch noch mit einer Abtastrate erfasst werden, die für eine vollständige Erfassung der Schwankungen des Verbrauchs des Verbrauchers unzureichend ist.

Indem bei dem neuen Verfahren die charakteristischen zeitlichen Verläufe des Verbrauchs von Leistung durch die einzelnen Verbraucher mit einer vergleichsweise hohen Abtastrate erfasst werden, können zeitliche Schwankungen des Verbrauchs durch einzelne Verbraucher bei der Erstellung des Plans für die Zuteilung von elektrischer Leistung an die einzelnen Verbraucher berücksichtigt werden. Im Idealfall wird zwei oder mehr Verbrauchern mit oszillierendem Verbrauch von elektrischer Leistung die verfügbare elektrische Leistung gegen- bzw. versetztphasig zugeteilt, so dass sich die oszillierenden Anteile ihres Verbrauchs gegenseitig ausgleichen. Zumindest kann bei der Erstellung des Plans für die Zuteilung von elektrischer Leistung der vorübergehend überdurchschnittliche hohe Verbrauch von elektrischer Leistung derartiger Verbraucher berücksichtigt werden, und in den Zeiträumen geringeren Verbrauchs kann die dadurch freie elektrische Leistung anderen Verbrauchern zugeteilt werden. Hierfür kommen neben gegenphasig betreibbaren Verbrauchern mit ebenfalls oszillierendem Verbrauch insbesondere solche Verbraucher in Frage, die nicht auf eine kontinuierliche Versorgung mit elektrischer Leistung angewiesen sind. Hierzu zählen beispielsweise elektrische Heizeinrichtungen oder Energiespeicher.

Wenn eine gezielte Zuteilung von elektrischer Leistung an einzelne Verbraucher in Lücken des Verbrauchs anderer Verbraucher erfolgen soll, versteht es sich, dass die nach dem Plan erfolgende Zuteilung elektrischer Leistung ebenfalls mit einer hohen Taktrate von mindestens 0,1 Hz, vorzugsweise von mindestens 1 Hz, mehr bevorzugt mindestens 10 Hz und am meisten bevorzugt mindestens 100 Hz, d. h. einmal pro Halbwelle eines üblichen Wechselstroms erfolgen muss.

Wenn bei der Erstellung der Prognose nicht erhebliche Sicherheitsreserven eingebaut werden, die, wenn sie nicht benötigt werden, erheblicher nicht eigenverbrauchter Leistung entsprechen, werden sich Unterschreitungen der Prognose durch die von dem Stromgenerator tatsächlich zur Verfügung gestellte elektrische Leistung nicht vermeiden lassen. Ebenso kann schnell ein außerplanmäßiger Verbrauch von elektrischer Leistung eintreten, indem beispielsweise ein Verbraucher, der unbedingt mit elektrischer Leistung zu versorgen ist, wie beispielsweise eine Beleuchtungseinrichtung, von einem Benutzer eingeschaltet wird. Daher ist es bevorzugt, wenn der Plan für die Zuteilung von elektrischer Leistung an die einzelnen Verbraucher fortlaufend auf Basis des tatsächlichen Angebots an elektrischer Leistung und der tatsächlichen Anforderung von elektrischer Leistung durch die einzelnen Verbraucher aktualisiert wird.

Verbrauchern, deren Anforderungen von elektrischer Leistung, zu einem Überschreiten des Angebots an elektrischer Leistung von dem mindestens einen Stromgenerator führen, können, insbesondere wenn dies wiederholt geschieht, mit einem Marker versehen werden. Der Marker kann dann bei der Aktualisierung des Plans für die Zuteilung von elektrischer Leistung an die einzelnen Verbraucher berücksichtigt werden. Die Berücksichtigung kann in der Form erfolgen, dass dem jeweiligen Verbraucher nur dann elektrische Leistung zugeteilt wird, wenn diese sicher zur Verfügung steht. Der Marker kann einen variablen Wert haben, der mit der Zahl und/oder der Höhe der Überschreitungen des Angebots an elektrischer Leistung ansteigt. Hiermit wird ein Malus-System etabliert, wobei der größte Malus bedeutet, dass dem Verbraucher nur noch solche Energie zugeteilt wird, die nicht anderweitig nutzbar ist.

In einer Ausführungsform des neuen Verfahrens gehört es zu dem Plan, dass die Zuteilung von elektrischer Leistung an die einzelnen Verbraucher für mindestens einen einzelnen Verbraucher eine Begrenzung der durch ihn maximal verbrauchbaren Leistung umfasst. Das heißt, dem mindestens einen Verbraucher wird zwar elektrische Leistung zur Verfügung gestellt, aber nicht in unbegrenztem, d. h. in dem von dem Verbraucher angeforderten, sondern nur in begrenztem Umfang. Damit kann zwar einerseits die Funktion des Verbrauchers sichergestellt aber doch andererseits ein Überschreiten der von dem Stromgenerator zur Verfügung gestellten elektrischen Leistung vermieden werden. Die Begrenzung der maximal verbrauchbaren Leistung kommt daher insbesondere für Verbraucher in Frage, die bereits mit dem oben erläuterten Marker versehen wurden. Verbraucher, denen ohne grundsätzliche Beeinträchtigung ihrer Funktionsweise eine begrenzte elektrische Leistung zur Verfügung gestellt werden kann, umfassen viele elektrische Heizeinrichtungen, einschließlich Wasch- und Spülmaschinen während ihrer Heizphase, und viele Beleuchtungseinrichtungen.

Die Begrenzung der durch einen einzelnen Verbraucher maximal verbrauchbaren Leistung kann beispielsweise durch Pulsweitenmodulation, konkret durch sogenannte Phasenanschnitt- bzw. -abschnittsteuerung erfolgen, wie sie auch in Dimmern üblich ist. Bei der Phasenanschnitt- bzw. -abschnittsteuerung wird einem Wechselstromverbraucher von jeder Halbwelle des Wechselstroms nur ein Teil zur Verfügung gestellt. Dabei kann der ihm zur Verfügung gestellte Teil der Halbwelle maximal von Halbwelle zu Halbwelle, d h. mit 100 Hz, variiert werden.

Bei dem neuen Verfahren kann auch in den Verbrauch von elektrischer Leistung durch von einem Benutzer willkürlich einschaltbare oder sich willkürlich einschaltende Verbraucher eingegriffen werden, denen unbedingt elektrische Leistung zur Verfügung zu stellen ist, um ihre Funktion sicherzustellen. So kann durch Begrenzung der durch eine Beleuchtungseinrichtung, die aus Sicherheitsgründen immer funktionsfähig sein muss, verbrauchbaren elektrischen Leistung elektrische Leistung eingespart werden, die an anderer Stelle benötigt wird. Durch Beschränkung der elektrischen Leistung, die einer elektrischen Heizeinrichtung zur Verfügung gestellt wird, die im An-Aus-Reglerbetrieb arbeitet, um eine vorgewählte Temperatur zu halten, wie beispielsweise ein elektrischer Herd, werden sich die An-Intervalle verlängern, ohne dass dies aber einen Einfluss auf die grundsätzliche Funktion der Heizeinrichtung hat. Die durch diese Art der Beschränkung der durch einen einzelnen Verbraucher verbrauchbaren elektrischen Leistung eingesparte elektrische Leistung kann an anderer Stelle eingesetzt werden. Zudem führt sie zu einer Nivellierung, d. h. einer Vergleichmäßigung der durch den einzelnen Verbraucher verbrauchten elektrischen Leistung. Maximal ist diese Nivellierung dann, wenn die An-Intervalle nur noch in größeren zeitlichen Abständen durch kurze Aus-Intervalle unterbrochen werden, die anzeigen, dass die Regelung der Heizeinrichtung weiterhin funktioniert. Auch dies kann durch die hochfrequente Messung des aktuellen Verbrauchs der einzelnen Verbraucher bei dem neuen Verfahren überwacht werden.

Bei dem neuen Verfahren kann die Zuteilung von elektrischer Leistung an die einzelnen Verbraucher für mindestens einen einzelnen Verbraucher über einen schaltbaren, d. h. ein- und ausschaltbaren, Einzelanschluss erfolgen. Weiterhin ist es möglich, dass die Zuteilung von elektrischer Leistung an die einzelnen Verbraucher für mindestens einen einzelnen Verbraucher durch Ansteuerung einer Schnittstelle einer Steuerung des einzelnen Verbrauchers erfolgt, wenn dieser über eine derartige ansteuerbare Schnittstelle verfügt. Für Verbraucher, die weder durch einen schaltbaren Anschluss ein- und ausschaltbar sind noch über eine ansteuerbare Schnittstelle verfügen, kann die Zuteilung von elektrischer Leistung vielfach mittels eines an den Verbraucher montierten ansteuerbaren Betätigungselements für einen Einschaltknopf des Verbrauchers erfolgen. Dies gilt beispielsweise für verschiedene Wasch -und Spülmaschinen.

Welche Eingriffsmöglichkeiten in den aktuellen Verbrauch von elektrischer Leistung durch die einzelnen Verbraucher bestehen, hängt stark von den einzelnen Verbrauchern ab. Zwar können die Eingriffsmöglichkeiten in gewissem Umfang durch Versuche ermittelt werden. Bevorzugt ist es jedoch, wenn die Eingriffsmöglichkeiten durch Zugriff auf Einträge zu den einzelnen Verbrauchern in einer externen Datenbank erfasst werden.

Zudem können charakteristische zeitliche Verläufe des Verbrauchs von elektrischer Leistung durch die einzelnen Verbraucher über eine bidirektionale Datenbankanbindung in eine externe Datenbank hochgeladen und/oder von dort heruntergeladen werden. Die charakteristischen zeitlichen Verläufe können dabei insbesondere auch verschiedene Lastgänge bei verschiedenen Verbrauchereinstellungen umfassen.

Die für das Herunterladen von Informationen zu einzelnen Verbrauchern aus einer Datenbank erforderliche Identifizierung der einzelnen Verbraucher kann durch manuelle Eingabe erfolgen. Vielfach ist sie aber auch anhand des charakteristischen zeitlichen Verlaufs des Verbrauchs von elektrischer Leistung durch die einzelnen Verbraucher möglich. Das heißt der charakteristische zeitliche Verlauf des Verbrauchs wird als identifizierender Fingerabdruck des jeweiligen Verbrauchers verwendet.

Da einige Verbraucher besondere Charakteristika des zeitlichen Verlaufs ihres Verbrauchs von elektrischer Leistung erst im höherfrequenten Bereich zeigen, wird der Verbrauch elektrischer Leistung durch die einzelnen Verbraucher, bzw. der Strom- und Spannungsverlauf an den einzelnen Verbrauchern, vorzugsweise mit einer Abtastrate von mindestens 1 kHz, insbesondere mehreren Kilohertz erfasst. Häufig kann bereits aus der Auswertung dieser zeitlich hochaufgelösten Erfassung des zeitlichen Verlaufs des Verbrauchs der einzelnen Verbraucher auf Eingriffsmöglichkeiten in diesen Verbrauch, wie beispielsweise durch Pulsweitenmodulation geschlossen werden.

Zumindest bei Kenntnis der Mitglieder der Gruppe der einzelnen Verbraucher ist anhand des charakteristischen zeitlichen Verlaufs ihres Verbrauchs eine Zuordnung der einzelnen Verbraucher zum Beispiel zu den Einzelanschlüssen möglich, an denen ein Verbrauch mit dem jeweiligen charakteristischen Verlauf gemessen wird.

Weiterhin können die einzelnen Verbraucher durch Vergleich des tatsächlichen zeitlichen Verlaufs ihres Verbrauchs mit dem charakteristischen zeitlichen Verlauf ihres Verbrauchs auf ordnungsgemäße Funktion überwacht werden. Es versteht sich, dass dabei etwaige Beschränkungen ihres Verbrauchs von elektrischer Leistung als Zuteilungsmaßnahme nach dem erfindungsgemäßen Plan zu berücksichtigen sind.

In einer Ausführungsform des neuen Verfahrens wird der Verbrauch von elektrischer Leistung durch jeden einzelnen Verbraucher an seinem Einzelanschluss gemessen. Grundsätzlich reicht zum Messen des Verbrauchs aber auch ein einziger Verbrauchszähler aus. Dieser zeigt die Summe des Verbrauchs von elektrischer Leistung durch die einzelnen Verbraucher an. Insbesondere bei Messung des Gesamtverbrauchs mit hoher zeitlicher Auflösung kann darauf geschlossen werden, ob er die charakteristischen zeitlichen Verläufe des Verbrauchs von elektrischer Leistung durch bestimmte Verbraucher umfasst, d. h. welche Verbraucher aktuell elektrische Leistung verbrauchen und in welchem Stadium ihres charakteristischen zeitlichen Verlaufs des Verbrauchs von elektrischer Leistung sie sich befinden. Zumindest durch Ein- und Ausschalten der einzelnen Verbraucher ist der Anteil jedes einzelnen Verbrauchers an dem Gesamtverbrauch zu ermitteln, selbst wenn die charakteristischen Verläufe des Verbrauchs der einzelnen Verbraucher noch nicht bekannt sind. Nach erfolgter Ermittlung der charakteristischen Verläufe des Verbrauchs können somit auch solche Verbraucher bei der Erstellung des Plans für die Zuteilung von elektrischer Leistung berücksichtigt werden, deren Verbrauch nicht direkt gemessen wird.

Der Gesamtverbrauch kann auch erfasst werden, um einen charakteristischen zeitlichen Verlauf des Verbrauchs von elektrischer Leistung durch alle Verbraucher, in deren Verbrauch mangels technischer Möglichkeit nicht eingegriffen werden kann oder sinnvoller Weise nicht eingegriffen wird, zu erfassen und in die Erstellung des Plans für die Zuteilung von elektrischer Leistung an die einzelnen Verbraucher, bei denen diese Zuteilung möglich ist, einzubeziehen. Der charakteristische zeitliche Verlauf des Verbrauchs von elektrischer Leistung durch alle Verbraucher, in deren Verbrauch nicht eingegriffen wird, bezieht sich typischerweise auf einen vergleichsweise langen Zeitraum, der insbesondere mindestens einen Tag umfasst, aber auch eine Woche, einen Monat oder sogar ein Jahr (um jahreszeitlich bedingte Variationen zu erfassen) umfassen kann. Der Zeitraum, auf den sich dieser charakteristische zeitliche Verlauf des Verbrauchs von elektrischer Leistung bezieht, kann damit insbesondere auch länger als der Zeitraum sein, für den der Plan für die Zuteilung elektrischer Leistung aufgestellt wird. Demgegenüber bezieht sich der charakteristische zeitliche Verlauf des Verbrauchs von elektrischer Leistung durch die einzelne Verbraucher, in deren Verbrauch eingegriffen wird, insbesondere auf einen vergleichsweise kürzeren Zeitraum, der typischerweise eine Betriebsperiode vom Anschalten oder Anspringen des jeweiligen Verbrauchers bis zu seinem wieder Abschalten umfasst und selten länger als ein Tag und damit selten länger als der Zeitraum ist, für den der Plan für die Zuteilung elektrischer Leistung aufgestellt wird. Eine Betriebsperiode eines Kühlschranks läuft zum Beispiel vom Anspringen bis zum wieder Abschalten seines Kältekompressors, während eine Betriebsperiode einer Waschmaschine einem Waschprogramm entspricht.

An dieser Stelle sei angemerkt, dass bei dem erfindungsgemäßen Verfahren weder in den Verbrauch elektrischer Leistung jedes einzelnen Verbrauchers eines lokalen Stromnetzes eingegriffen werden muss, noch dass zu jedem einzelnen Verbraucher, insbesondere einem solchen, in dessen Verbrauch nicht eingegriffen wird, ein charakteristischer zeitlicher Verlauf des Verbrauchs von elektrischer Leistung erfasst werden muss. Vielmehr können zum Beispiel mehrere oder alle Verbraucher, in deren Verbrauch nicht eingegriffen wird, als ein weiterer einzelner Verbraucher betrachtet werden.

Konkret können bei dem neuen Verfahren die in das öffentliche Stromnetz eingespeiste Leistung, die aus dem öffentlichen Stromnetz bezogene Leistung und die vor Ort mit allen Stromgeneratoren erzeugte Leistung erfasst werden, um einen Gesamtverbrauch in dem lokalen Stromnetz und dessen zeitlichen Verlauf zu ermitteln. Aus dem Gesamtverbrauch wird durch Abziehen des Verbrauchs von elektrischer Leistung durch alle Verbraucher, in deren Verbrauch eingegriffen wird, eine Grundverbrauchsprognose ermittelt, die dem charakteristischen zeitlichen Verlaufs des Verbrauchs von elektrischer Leistung durch alle Verbraucher entspricht, in deren Verbrauch nicht eingegriffen wird. Bei dem Ziel eines optimalen Eigenverbrauchs stellt die Differenz zwischen dieser Grundverbrauchsprognose und der Prognose zum zeitlichen Verlauf des Angebots an elektrischer Leistung, die von dem mindestens einem Stromgenerator erzeugt wird, einen Spielraum für den Plan für die Zuteilung von elektrischer Leistung an die einzelnen Verbraucher dar, in deren Verbrauch eingegriffen wird.

Von einem Einzelanschluss eines einzelnen Verbrauchers aus können neben seinem Verbrauch an elektrischer Leistung auch noch weitere aktuelle elektrische Kenndaten des jeweiligen Verbrauchers erfasst werden, wie beispielsweise eine Impedanz zwischen seinen Anschlussleitungen. Hiermit kann beispielsweise auf den aktuellen Schaltzustand und in Kombination mit der erwähnten Extrapolation, oder sogar direkt auf die aktuelle Temperatur von Bimetall-geschalteten Heiz- oder Kühleinrichtungen rückgeschlossen werden. Zur Messung aktueller elektrischer Kenndaten mindestens eines einzelnen Verbrauchers von seinem Einzelanschluss zählt es auch, wenn dem Verbraucher testweise elektrische Leistung zur Verfügung gestellt wird, um zu prüfen, ob und in welcher Höhe er diese aktuell verbrauchen würde.

Noch weitere aktuelle physikalische Kenndaten eines einzelnen Verbrauchers können mit zusätzlichen Sensoren gemessen und bei der Aktualisierung des Plans für die Zuteilung der elektrischen Leistung berücksichtigt werden. Hierzu gehören beispielsweise Temperatursensoren für Kühlschränke und andere Kühleinrichtungen oder auch für Heizeinrichtungen, die mit ihrem Signal anzeigen, wie nötig die Zuteilung von elektrischer Leistung zu der jeweiligen Einrichtung ist. Bei Kühlschränken kann auch eine Öffnung der Tür mit einem derartigen Sensor erfasst werden, um die Innenbeleuchtung des Kühlschranks durch Stromzufuhr zu dem Kühlschrank zu aktivieren oder um eine Ersatzbeleuchtung einzuschalten. Zudem kann eine Öffnung des Kühlschranks als Hinweis auf einen nahenden Bedarf des Kühlschranks an elektrischer Leistung erfasst und bei einer Aktualisierung des Plans für die Zuteilung der elektrischen Leistung des Stromgenerators berücksichtigt werden,

Die Prognosen zum zeitlichen Verlauf des Angebots an elektrischer Leistung von dem Stromgenerator werden vorzugsweise auf der Basis von Wettervorhersagen erstellt. Hierzu zählen insbesondere lokale Wettervorhersagen oder auch laufende Wetterberichte. Bei einem Solarstromgenerator ist bei der Erstellung der Prognose zum zeitlichen Verlauf des Angebots an elektrischer Leistung natürlich auch der Verlauf des Sonnenstands über den Tag zu berücksichtigen. Hinzu kommen die Kenndaten des Stromgenerators selbst.

Die für die Prognose zum zeitlichen Verlauf des Angebots an elektrischer Leistung verwendeten Wettervorhersagen können auch genutzt werden, um Gewitter am Ort des jeweiligen lokalen Stromnetzes festzustellen, um daraufhin gefährdete Verbraucher und/oder Stromgeneratoren abzuschalten.

Insbesondere dann, wenn das Angebot an elektrischer Leistung von dem Stromgenerator nicht ausreichend ist, kann eine weitere Prognose zum zeitlichen Verlauf von Bedingungen eines Bezugs von elektrischer Leistung aus einem öffentlichen Stromnetz für den in der Zukunft liegenden Zeitraum erstellt und beim Erstellen des Plans für die Zuteilung von elektrischer Leistung an die einzelnen Verbraucher über den in der Zukunft liegenden Zeitraum berücksichtigt werden. Auch dann, wenn die von dem Stromgenerator bereitgestellte elektrische Leistung grundsätzlich ausreichend ist oder sogar überschüssige elektrische Leistung in das angeschlossene öffentliches Stromnetz eingespeist werden kann, kann eine solche weitere Prognose vorteilhaft sein. So mag die Möglichkeit bestehen, die durch den Stromgenerator zur Verfügung gestellte elektrische Leistung zu einem bestimmten Zeitpunkt zu einem sehr günstigen, d. h. hohen Tarif in das öffentliche Stromnetz einzuspeisen, während zu einem anderen Zeitpunkt innerhalb des in der Zukunft liegenden Zeitraums die benötigte elektrische Leistung nur zu einem ungünstigeren Tarif eingespeist, dafür aber zu einem günstigeren, d. h. niedrigeren Tarif bezogen werden kann.

Bei dieser weiteren Prognose können neben variablen Tarifen auch Tarife verschiedener Stromanbieter Berücksichtigung finden. Auch grundsätzlich können Auswirkungen einer alternativen Bereitstellung eines gleichen Ergebnisses unter anderen Bedingungen des Bezugs von elektrischer Leistung aus dem öffentlichen Stromnetz und/oder der Einspeisung von elektrischer Leistung in das öffentliche Stromnetz für den in der Zukunft liegenden Zeitraum oder einen in der Vergangenheit liegenden Zeitraum bestimmt werden. So kann beispielsweise sowohl in die Zukunft blickend nach den unter den Randbedingungen des Plans für die Zuteilung von elektrischer Leistung an die einzelnen Verbraucher voraussichtlich günstigsten Tarifen verschiedener Anbieter gesucht werden, als auch rückblickend eine entsprechende Überprüfung vorgenommen werden.

In den unter Berücksichtigung dieser weiteren Prognose erstellten Plans für die Zuteilung von elektrischer Leistung an die einzelnen Verbraucher über den in der Zukunft liegenden Zeitraum kann insbesondere der bidirektionale Austausch elektrischer Leistung mit einem Energiespeicher und/oder einem öffentlichen Stromnetz, d.h. das Zwischenspeichern von elektrischer Leistung in Batterien und auch das Einspeisen von elektrischer Leistung aus Batterien in das öffentliche Stromnetz einbezogen werden. Dazu kann eine weitere Prognose zum zeitlichen Verlauf von Bedingungen einer Zwischenspeicherung von elektrischer Leistung in einem Speicher für elektrische Energie für den in der Zukunft liegenden Zeitraum erstellt und beim Erstellen des Plans für die Zuteilung von elektrischer Leistung an die einzelnen Verbraucher über den in der Zukunft liegenden Zeitraum berücksichtigt werden. Die Bedingungen einer Zwischenspeicherung umfassen dabei insbesondere Kosten, die durch die Zwischenspeicherung entstehen, welche hauptsächlich durch die Verteilung der Anschaffungs- und Betriebskosten auf die Lebensdauer des Speichers und die Anzahl der Lade- und Entladezyklen bestimmt sind. Durch zu verschiedenen Zeitpunkten unterschiedliche Stromtarife, kann der Plan für die Zuteilung von elektrischer Leistung an die einzelnen Verbraucher auch das Gegenteil eines Eigenverbrauchs von lokal erzeugter elektrischer Energie zur Folge haben. Das erfindungsgemäße Verfahren nimmt dabei zwar das öffentliche Stromnetz in Anspruch, stützt dadurch das bedarfsgerechte Angebot an elektrischer Leistung in dem öffentlichen Stromnetz aber aktiv.

Nach den hier offenbarten Prinzipien können auch verschiedene Gruppen von Verbrauchern und/oder Stromgeneratoren miteinander vernetzt werden. So kann eine weitere Prognose zum zeitlichen Verlauf von Bedingungen eines Transfers von elektrischer Leistung zu und von mindestens einer anderen Gruppe von Verbrauchern und/oder Stromgeneratoren für den in der Zukunft liegenden Zeitraum erstellt und beim Erstellen des Plans für die Zuteilung von elektrischer Leistung an die einzelnen Verbraucher über den in der Zukunft liegenden Zeitraum berücksichtigt werden.

Es gibt Fälle, in denen ein gleiches gewünschtes Ergebnis wie durch einen der vorhandenen Verbraucher oder Stromgeneratoren auch durch einen anderen vorhandenen Verbraucher oder Stromgenerator oder eine andere vorhandene Einrichtung erreicht werden kann. Dies gilt zum Beispiel, wenn eine Heizleistung für eine Erwärmung von Wasser entweder durch Verbrennung eines Brennstoffs oder durch Umwandlung elektrischer Leistung in Heizleistung bereitgestellt werden kann, oder auch wenn elektrische Leistung durch verschiedene mit Brennstoff betriebene Generatoren und/oder durch eine Batterie bereitgestellt werden kann. In diesen Fällen kann eine weitere Prognose zum zeitlichen Verlauf von Bedingungen einer alternativen Bereitstellung eines gleichen Ergebnisses durch einen anderen vorhandenen Verbraucher oder Stromgenerator oder eine andere vorhandene Einrichtung für den in der Zukunft liegenden Zeitraum erstellt und beim Erstellen des Plans für die Zuteilung von elektrischer Leistung an die einzelnen Verbraucher über den in der Zukunft liegenden Zeitraum berücksichtigt werden. Die Berücksichtigung der Prognose kann dabei zum Beispiel unter dem Gesichtspunkt der Kosten, des CO₂-Ausstoßes oder der lokalen Abgasbelastung erfolgen.

Zudem können Auswirkungen einer alternativen Bereitstellung eines gleichen Ergebnisses durch einen anderen derzeit nicht vorhandenen Verbraucher oder Stromgenerator oder eine andere derzeit nicht vorhandene Einrichtung für den in der Zukunft liegenden Zeitraum oder einen in der Vergangenheit liegenden Zeitraum bestimmt werden. Aus diesen Bestimmungen kann abgeleitet werden, ob es lohnend wäre, einen der Verbraucher oder Stromgeneratoren durch einen anderen auszutauschen oder einen weiteren Stromgenerator anzuschaffen.

Neben Verbrauchern, die während jedes in der Zukunft liegenden Zeitraums ausreichender Länge einen Bedarf an elektrischer Leistung haben, gibt es auch viele Verbraucher, die nur in größeren oder sehr unregelmäßigen Abständen elektrische Leistung benötigen. Derartige Verbraucher können bei dem neuen Verfahren dennoch in den Plan für die Zuteilung der elektrischen Leistung eingearbeitet werden, insbesondere wenn Benutzervoranmeldungen für den Betrieb dieser Verbraucher vorliegen. Solche Benutzervoranmeldungen können insbesondere als Zeitvorgabe den gewünschten Zeitraum eines Betriebs eines Verbrauchers, beispielsweise einer Waschmaschine, einen gewünschten Endtermin für diesen Betrieb, d.h. beispielsweise den gewünschten Termin für den Abschluss des Waschvorganges, oder auch eine gewünschte Temperaturspanne für Warmwasser, das in einem bestimmten Zeitraum zur Verfügung stehen soll, umfassen.

Neben solchen Benutzervoranmeldungen kann ein Benutzer den einzelnen Verbrauchern unterschiedliche Benutzerprioritäten in dem in der Zukunft liegenden Zeitraum zuordnen. Diese Benutzerprioritäten können dann beim Erstellen des Plans für die Zuteilung von elektrischer Leistung an die einzelnen Verbraucher berücksichtigt werden. Dabei können diese Benutzerprioritäten von solchen, die eine unbedingte Zuteilung von elektrischer Leistung garantieren, bis herab zu solchen reichen, die einer Zuteilung von elektrischer Leistung nur bei einem sonst nicht verwertbaren Leistungsüberschuss des Stromgenerators oder bei benötigter negativer Regelleistung entsprechen.

Die Benutzervoranmeldungen und die Benutzerprioritäten sind Benutzerzielvorgaben mit individuellem Charakter, da sie in der Regel verbraucherspezifisch sind, und unterscheiden sich in sofern von globalen Benutzerzielvorgaben, die Ziele vorgeben, welche durch konzertierte Aktion aller Verbraucher, Stromgeneratoren, Speicher und des öffentlichen Stromnetzes angestrebt werden. Ebenso wie in dem Fall verschiedener globaler Benutzerzielvorgaben, wie beispielsweise Eigenverbrauchsmaximierung und Kostenminimierung, können auch zwischen Benutzervoranmeldungen und Benutzerprioritäten oder zwischen diesen individuellen Zielvorgaben einerseits und globalen Benutzerzielvorgaben andererseits grundsätzlich Konflikte auftreten. Diese Konflikte werden bei dem hier beschriebenen Verfahren jedoch automatisch dadurch gelöst, dass die einzelnen Benutzerzielvorgaben durch Gewichtung des Verbrauchs von und/oder des Angebots an elektrischer Leistung umgesetzt werden.

Konkret werden alle Benutzerzielvorgaben durch eine unterschiedliche Gewichtung des Verbrauchs von elektrischer Leistung durch unterschiedliche Verbraucher und/oder des Angebots von elektrischer Leistung aus unterschiedlichen Quellen in dem in der Zukunft liegenden Zeitraum umgesetzt. Die unterschiedliche Gewichtung des Verbrauchs von elektrischer Leistung durch unterschiedliche Verbraucher kann konkret unterschiedliche Gewichtungsfaktoren für die durch die unterschiedlichen Verbraucher verbrauchte elektrische Leistung und/oder deren Kosten in dem in der Zukunft liegenden Zeitraum umfassen. Alternativ oder zusätzlich kann die unterschiedliche Gewichtung des Angebots von elektrischer Leistung aus unterschiedlichen Quellen unterschiedliche Gewichtungsfaktoren für die verbrauchte elektrische Leistung aus den unterschiedlichen Quellen und/oder deren Kosten in dem in der Zukunft liegenden Zeitraum umfassen.

Ein derartiger Gewichtungsfaktor kann beispielsweise auch durch einen funktionalen Zusammenhang zwischen einem geplanten Start- und/oder Endzeitpunkt des Betriebs eines Verbrauchers und einem in Form einer Benutzervoranmeldungen vorgegebenen gewünschten Start- bzw. Endzeitpunkt unter Berücksichtigung der Benutzerpriorität dargestellt werden, wobei eine umso höhere Gewichtung erfolgt, je größer die Abweichung des geplanten Zeitpunktes vom gewünschten Zeitpunkt ist. Ein weiterer Gewichtungsfaktor kann durch einen funktionalen Zusammenhang zwischen einer in einem bestimmten Zeitraum gewünschten und einer mit einem konkreten Plan in diesem Zeitraum erzielbaren Warmwassertemperatur derart dargestellt werden, dass die Gewichtung umso höher ist, je niedriger die erzielbare Temperatur ausfällt. Dabei können zusätzliche obere und untere Grenzwerte sowohl für die gewünschte Temperatur als auch für die Start- bzw. Endzeitpunkte vorgegeben werden, wobei deren Über- bzw. Unterschreiten zu einer exponentiell fallenden bzw. steigenden Gewichtung führt. Dies sind aber nur zwei Beispiel dafür, dass die Gewichtungsfaktoren für die verbrauchte elektrische Leistung und/oder deren Kosten in dem in der Zukunft liegenden Zeitraum variieren und insbesondere eine Funktion der Zeit sein können. Auch ein unbedingter Einschaltwunsch für einen bestimmten Verbraucher für eine bestimmte Zeitspanne kann durch einen speziellen Wert des zugehörigen Gewichtungsfaktors in dieser Zeitspanne abgebildet werden. Beispielsweise kann dieser spezielle Wert null bzw. bei Nichteinhalten der Zeitspanne unendlich sein. Zudem können Abhängigkeiten bzgl. der relativen zeitlichen Reihenfolge des Betriebs bestimmter Verbraucher dadurch abgebildet werden, dass die Gewichtungsfaktoren derart miteinander verknüpft werden, dass der Gewichtungsfaktor eines bestimmten Verbrauchers den Wert unendlich besitzt, solange der Betrieb eines anderen bestimmten Verbrauchers nicht abgeschlossen ist. Ein Beispiel für eine solche notwendige Reihenfolge ist der Betrieb eines Wäschetrockners, der naturgemäß erst für einen Zeitraum sinnvoll einplanbar ist, der nach der Beendigung eines Waschprogramms einer Waschmaschine liegt. Des weiteren können weitere Parameter, die momentane oder geplante Zustände von Verbrauchern beschreiben, in die Gewichtungsfaktoren einfließen; insbesondere bei der Verwendung von Energiespeicher kann dadurch deren aktueller und voraussichtlich zukünftiger Speicherinhalt sowie deren natürliche Selbstentladung bei der Planung berücksichtigt werden.

Wenn verschiedene Benutzerzielvorgaben aufeinander treffen, d.h. zugleich gelten sollen, können die zugehörigen Gewichtungsfaktoren vor ihrer Anwendung einfach aufaddiert werden. Damit die verschiedenen Benutzerzielvorgaben dann gleiche Berücksichtigung finden sind sie zuvor auf einen gemeinsamen Standard zu normieren. Die Gewichtungsfaktoren für verschiedene zugleich geltende Benutzerzielvorgaben können aber auch Gewichtungsgrundfaktoren aufweisen, die zwar auf einen gemeinsamen Standard normiert sind, der einer gleichen Wichtigkeit der verschiedenen Benutzerzielvorgaben entspricht, die dann aber für jede der Benutzerzielvorgaben mit einem festen Wichtigkeitsfaktor multipliziert werden, der der relativen Wichtigkeit der Benutzerzielvorgabe gegenüber den anderen zugleich geltenden Benutzerzielvorgaben entspricht. Durch unterschiedliche Größe dieser Wichtigkeitsfaktoren kann eine Benutzerpräferenz einer Benutzerzielvorgabe gegenüber einer oder mehreren anderen zugleich geltenden Benutzerzielvorgaben berücksichtigt werden.

Zur gleichzeitigen Berücksichtigung der zugleich geltenden Zielvorgaben nach deren Wichtigkeit kann dann eine Summe der gewichteten verbrauchten elektrischen Leistung und/oder eine Summe der gewichteten Kosten der verbrauchten elektrischen Leistung beim Erstellen des Plans für die Zuteilung von elektrischer Leistung an die einzelnen Verbraucher beispielsweise begrenzt oder minimiert werden.

Insgesamt steht damit eine praktikable Gewichtung von konkret geplanten Verbräuchen elektrischer Leistung durch die einzelnen Verbraucher auf Basis verschiedener Benutzerprioritäten und Benutzerzielvorgaben zur Verfügung, wobei hier nochmals beispielhaft die Benutzerzielvorgaben "Minimierung der Kosten", "Minimierung des Bezugs von elektrischer Leistung aus dem öffentlichen Stromnetz", "Minimierung der Abweichungen der Start- und/oder Endzeit des Betriebs eines Verbrauchers von einer Zeitvorgabe" sowie "Minimierung der Abweichung einer Warmwassertemperatur in einem bestimmten Zeitraum von einer Wunschtemperatur" genannt seien. Eine Summe von derart gewichteten Verbräuchen kann dann beim Erstellen des Plans für die Zuteilung von elektrischer Leistung an die einzelnen Verbraucher auf einen Maximalwert begrenzt oder grundsätzlich minimiert werden. Dadurch wird ermöglicht, neben tatsächlichen monetären Kosten eines Verbrauches von elektrischer Leistung weitere Faktoren in einfacher und für den Nutzer komfortabler Form zu berücksichtigen, wobei diese weiteren Faktoren individuell vom Nutzer festgelegt und untereinander gewichtet werden können.

Bei einem dreiphasigen Stromnetz kann die Zuteilung von elektrischer Leistung an einzelne einphasige Verbraucher nach dem Plan gleichmäßig verteilt über die drei Phasen erfolgen. Hierdurch werden Schieflasten vermieden, die trotz Verbrauchs von nicht mehr elektrischer Leistung, als sie durch den Stromgenerator erzeugt wird, dennoch dazu führen können, dass über eine Phase elektrische Leistung aus einem angeschlossenen öffentlichen Stromnetz bezogen wird, während sie über eine andere Phase in das öffentliche Stromnetz eingespeist wird.

Die hier beschriebene Verbrauchsoptimierung kann mit Hilfe einer zentralen Steuerung für die Zuteilung von elektrischer Leistung an die einzelnen Verbraucher durchgeführt werden, die charakteristische zeitliche Verläufe des Verbrauchs von elektrischer Leistung erfasst und die eine Prognose zum zeitlichen Verlauf des Angebots an elektrischer Leistung für einen in der Zukunft liegenden Zeitraum erstellt und basierend hierauf sowie den Benutzerzielvorgaben den Plan für die Zuteilung von elektrischer Leistung an die einzelnen Verbraucher für den in der Zukunft liegenden Zeitraum erstellt und dann die elektrische Leistung nach dem Plan zuteilt. Daneben sind Messeinrichtungen vorzusehen, die den Verbrauch von elektrischer Energie messen, um die Verbrauchsoptimierung durchführen zu können.

Einzelanschlüsse für den Anschluss jeweils eines einzelnen Verbrauchers können durch drahtlos oder über Power Line-Kommunikation schaltbare Steckdosen oder drahtlos oder über Power Line-Kommunikation schaltbare Steckdosenadapter realisiert werden. In diese Steckdosen bzw. Steckdosenadapter können auch die Messeinrichtungen für den jeweiligen Verbraucher integriert sein, die ihre Messwerte drahtlos oder über Power Line-Kommunikation an die zentrale Steuerung übermitteln.

Um auch solche Verbraucher, die nicht einfach durch Zurverfügungstellung von elektrischer Leistung ein- und ausschaltbar sind, nach dem Plan für die Zuteilung der elektrischen Leistung zu aktivieren, kann gegenüber mindestens einem Einschaltknopf eines einzelnen Verbrauchers ein ansteuerbares Betätigungselement angebracht werden. Indem dieses Betätigungselement angesteuert wird und dann den Einschaltknopf des Verbrauchers drückt, startet die zentrale Steuerung den einzelnen Verbraucher und teilt ihm damit elektrische Leistung zu.

Alternativ kann die zentrale Steuerung auch eine Schnittstelle aufweisen, über die sie mit einer Schnittstelle einer Steuerung des einzelnen Verbrauchers kommuniziert.

Um sich Informationen insbesondere über die Eingriffsmöglichkeiten in den aktuellen Verbrauch von elektrischer Leistung durch die einzelnen Verbraucher zu beschaffen, weist die zentrale Steuerung vorzugsweise eine Schnittstelle auf, über die sie auf eine externe Datenbank zugreift. Dies kann beispielsweise über das Internet geschehen. Eine Schnittstelle zum Internet kann die zentrale Steuerung auch zum Empfangen von Wettervorhersagen und Wetterberichten sowie zum Empfangen von Bedingungen eines Bezugs von elektrischer Leistung aus einem öffentlichen Stromnetz nutzen.

Die zentrale Steuerung kann auch eine Schnittstelle zum Empfang von Bedingungen einer Zwischenspeicherung von elektrischer Leistung in einem Speicher für elektrische Energie aufweisen. Diese Schnittstelle kann konkret zum Empfang der Bedingungen der Zwischenspeicherung von elektrischer Leistung in dem Speicher für elektrische Energie von einer Energiemanagementeinrichtung des Speichers ausgebildet sein. Solche Energiemanagementeinrichtungen sind bei bekannten Speichern für elektrische Energie in Batterien vorhanden.

Die zentrale Steuerung kann zudem eine Schnittstelle zur Vernetzung mit mindestens einer weiteren gleichartigen Vorrichtung aufweisen und über diese Schnittstelle Prognosen zum zeitlichen Verlauf des Angebots an elektrischer Leistung für den in der Zukunft liegenden Zeitraum mit der mindestens einen weiteren gleichartigen Vorrichtung austauschen. Über die Schnittstelle kann die zentrale Steuerung auch Bedingungen eines Transfers von elektrischer Leistung zu und von Einrichtungen, die von der mindestens einen weiteren gleichartigen Vorrichtung gesteuert werden, austauschen, um eine weitere Prognose zum zeitlichen Verlauf der Bedingungen des Transfers von elektrischer Leistung zu und von diesen Einrichtungen für den in der Zukunft liegenden Zeitraum zu erstellen und beim Erstellen des Plans für die Zuteilung von elektrischer Leistung zu berücksichtigen.

Um Benutzervoranmeldungen für den Betrieb einzelner Verbraucher aufzunehmen, können an den einzelnen Verbrauchern anzuordnende und mit der zentralen Steuerung kommunizierende Eingabeeinheiten vorgesehen werden. Über diese Eingabeeinheiten kann der Benutzer einen zeitlichen Rahmen für die Erfüllung der Benutzervoranmeldung vorgeben und auch andere Details der Benutzervoranmeldung, wie beispielsweise das von ihm voreingestellte Programm einer Waschmaschine, das erheblichen Einfluss auf den Verbrauch von elektrischer Leistung durch die Waschmaschine im Betrieb hat.

Die Eingabeeinheit kann ein Display aufweisen, über das die zentrale Steuerung dem Benutzer Empfehlungen für die Benutzervoranmeldung gibt, um diese besonders leicht einplanen zu können. Insbesondere dann, wenn die jeweilige Eingabeeinheit die Anforderung eines sofortigen Betriebs des einzelnen Verbrauchers ermöglicht, kann die Anzeigeeinheit auch dazu genutzt werden, dem Benutzer anzuzeigen, ob dies in den Grenzen der von dem Stromgenerator zur Verfügung gestellten Leistung möglich ist. Derartige Anzeigen zur momentanen Verfügbarkeit von elektrischer Leistung können auch an Verbrauchern vorgesehen sein, die grundsätzliche Priorität bei der Zuteilung von elektrischer Leistung haben, wie beispielsweise Beleuchtungseinrichtungen, um das Benutzerverhalten zu lenken.

Es kann auch eine Anzeigeeinheit zur Darstellung des gesamten Plans für die Zuteilung von elektrischer Leistung an die einzelnen Verbraucher vorgesehen sein, z. B. an der zentralen Steuerung, aber auch entfernt von dieser.

Um bei einem dreiphasigen Angebot von elektrischer Leistung die Vermeidung von Schieflasten in den Plan für die Zuteilung der elektrischen Leistung auf einfache Weise einbeziehen zu können, kann mindestens ein Adapter mit einem dreiphasigen Wechselstromeingang und mindestens einem mit der zentralen Steuerung wahlweise auf verschiedene Phasen des Wechselstromeingangs aufschaltbaren einphasigen Wechselstromausgang verwendet werden.

Ein erfindungsgemäß bezüglich seines Verbrauchs optimiertes lokales Stromnetz weist eine Gruppe von unterschiedlichen Verbrauchern und mindestens einen Wind- oder Solarstromgenerator auf. Das lokale Stromnetz kann ein Inselnetz sein. Wenn es an ein öffentliches Stromnetz angebunden ist, weist es vorzugsweise einen bidirektionalen Anschluss daran auf, der mit einem Einspeisezähler für in das öffentliche Stromnetz eingespeiste Leistung und mindestens einen Verbrauchszähler für aus dem öffentlichen Stromnetz bezogene elektrische Leistung versehen ist. Es können auch mehrere Verbrauchszähler vorhanden sein, um beispielsweise verschiedene Tarife oder verschiedene Stromanbieter beim Verbrauch von elektrischer Leistung aus dem Wechselstromnetz selektiv berücksichtigen zu können.

Die Größe eines an das öffentliche Stromnetz angeschlossenen lokalen Stromnetzes kann von einem einzelnen Haushalt über einen Straßenzug mit Anschluss an ein Ortsnetz über eine Verteilerstation bis zu einem (vermaschten) Ortsnetz mit Anschluss über einen Ortstrafo an ein Mittelspannungsnetz reichen. Der Wind- oder Solarstromgenerator kann irgendwo in dem jeweiligen lokalen Netz vorgesehen sein. Von den Haushalten eines Straßenzugs oder eines Ortsnetzes, die zu dem lokalen Stromnetz zusammengeschaltet sind, können alle, aber müssen nicht alle über einen Wind- oder Solarstromgenerator verfügen. Einige oder sogar alle Wind- oder Solarstromgeneratoren können auch getrennt von den einzelnen Haushalten in das lokale Stromnetz eingebunden sein.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein Blockschaltbild eines lokalen Stromnetzes.
- **Fig. 2**: ist ein Flussdiagramm einer Ausführungsform des erfindungsgemäßen Verfahrens.
- **Fig. 3**: zeigt eine Eingabeeinrichtung als Teil einer Vorrichtung zur Durchführung des erfindungsgemäßen Verfahrens in einer ersten Ausführungsform.
- **Fig. 4**: zeigt eine Eingabeeinrichtung als Teil einer Vorrichtung zur Durchführung des erfindungsgemäßen Verfahrens in einer zweiten Ausführungsform.
- **Fig. 5**: zeigt eine Eingabeeinrichtung als Teil einer Vorrichtung zur Durchführung des erfindungsgemäßen Verfahrens in einer weiteren Ausführungsform.
- **Fig. 6**: zeigt ein gegenüber einem Einschaltknopf eines einzelnen Verbrauchers angebrachtes ansteuerbares Betätigungselement einer Vorrichtung zur Durchführung des erfindungsgemäßen Verfahrens; und
- **Fig. 7**: zeigt einen Adapter mit einem dreiphasigen Wechselstromeingang und einem einphasigen Wechselstromausgang als Teil einer Vorrichtung zur Durchführung des erfindungsgemäßen Verfahrens.

### FIGURENBESCHREIBUNG

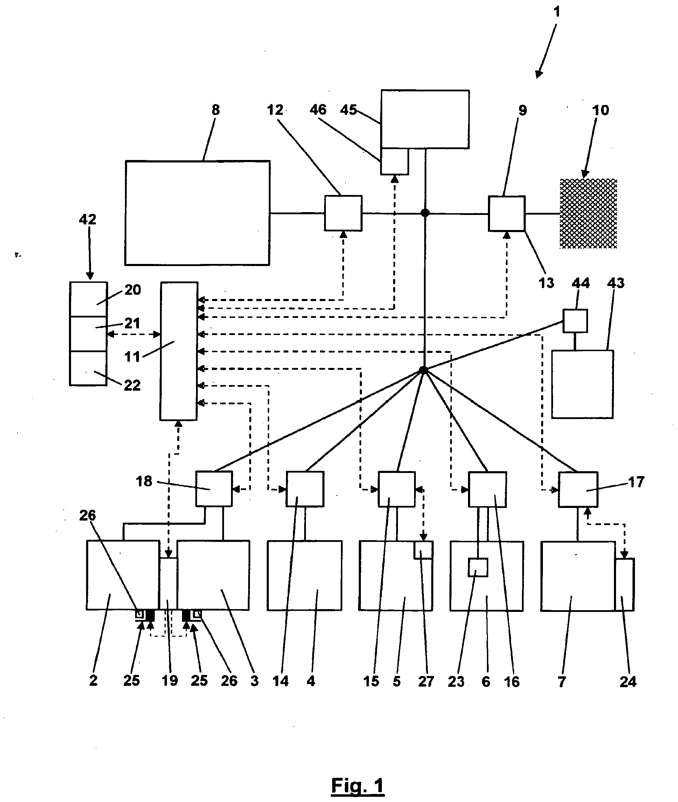

In Fig. 1 ist schematisch ein lokales Stromnetz 1 dargestellt, das eine Gruppe von Verbrauchern 2 bis 7, einen Stromgenerator 8, insbesondere einen Solarstromgenerator, einen Netzanschlusspunkt 9 zu einem öffentlichen Stromnetz 10 und eine zentrale Steuerung 11 aufweist, die den Verbrauchern 2 bis 7 elektrische Leistung des Stromgenerators 8 so zuteilt, dass beispielsweise ein maximaler Eigenverbrauch dieser Leistung ohne Belastung des öffentlichen Stromnetzes 10 realisiert wird. Hierzu weist die zentrale Steuerung 11 hier drahtlos ausgeführte Kommunikationsverbindungen auf
- zu einem Leistungsmessgerät 12, das die aktuelle Leistung des Stromgenerators 8 erfasst,
- zu einem Stromzähler 13 an dem Netzanschlusspunkt 9, der mindestens einen Verbrauchszähler für aus dem öffentlichen Stromnetz 10 bezogene elektrische Leistung, aber vorzugsweise mehrere Verbrauchszähler und auch mindestens einen Einspeisezähler für in das öffentliche Stromnetz 10 eingespeiste elektrische Leistung des Stromgenerators 8 aufweist,
- zu Einzelanschlüssen 14 bis 17 der Verbraucher 4 bis 7 sowie einem Doppelanschluss 18 der die Verbraucher 2 und 3,
- zu einer Eingabeeinheit 19 für Benutzervoranmeldungen für den Betrieb der Verbraucher 2 und 3,
- zu einer Energiemanagementeinrichtung 46 eines Speichers 45 für elektrische Energie, beispielsweise in Batterien, und
- zum Internet 42.

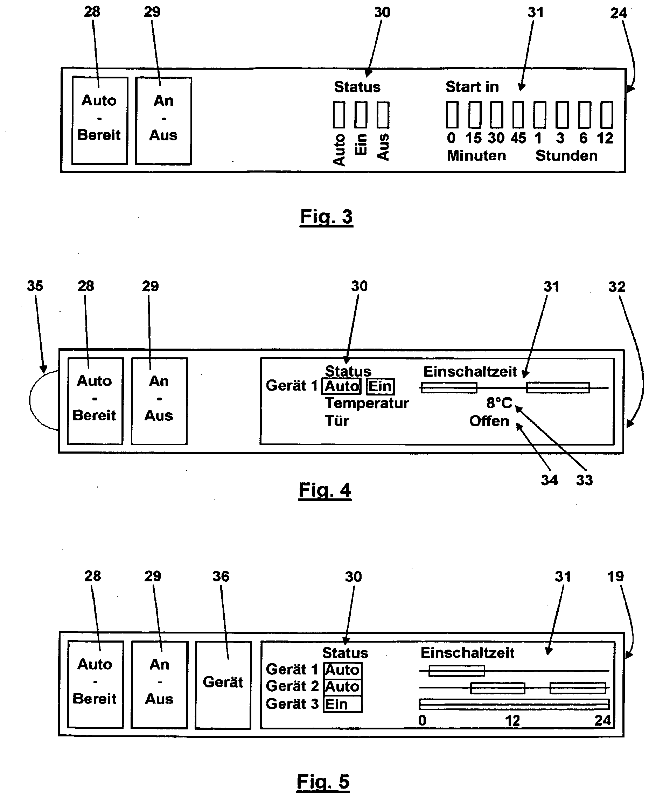

Das Internet 42 stellt der zentralenSteuerung 11 dabei eine Datenbank 20 mit Informationen zu den Verbrauchern 2 bis 7, eine Quelle 21 für Wetterberichte und eine Quelle 22 für Tarifinformationen über Stromtarife für den Bezug elektrischer Leistung aus dem öffentlichen Stromnetz 10 bereit. Die Einzelanschlüsse 14 bis 17 umfassen Messeinrichtungen für den Verbrauch der einzelnen Verbraucher 4 bis 7. Die Verbrauchmessungen erfolgen mit hoher Abtastrate von mindestens 0,1 Hz. Die Messwerte werden der zentralen Steuerung 11 übermittelt. Zudem sind die Einzelanschlüsse 14 bis 17 schaltbar, um die Stromzufuhr zu den Verbrauchern 4 bis 7 freizuschalten bzw. zu unterbrechen. Dieses Freischalten bzw. Unterbrechen der Stromzufuhr kann dabei mit niedriger bis hoher Frequenz, letzteres beispielsweise im Sinne einer Phasenanschnittsteuerung eines Wechselstroms, erfolgen. Die Einzelanschlüsse 14 bis 17 können neben den Messeinrichtungen für den Verbrauch der einzelnen Verbraucher 4 bis 7 auch Messeinrichtungen für andere elektrische Kenndaten der Verbraucher 4 bis 7 aufweisen. Weiterhin kann an einen Einzelanschluss, wie hier an den Einzelanschluss 16, ein weiterer Sensor 23 angeschlossen sein, um weitere physikalische Kenndaten des Verbrauchers 6 zu erfassen, beispielsweise die Temperatur im Inneren eines Kühlschranks. Darüber hinaus kann an einen Einzelanschluss, wie hier den Einzelanschluss 17, eine Eingabeeinheit 24 angeschlossen sein, über die ein Benutzer des Verbrauchers 7 Benutzervoranmeldungen für den Betrieb des Verbrauchers 7 vornehmen kann. Hierzu zählt es auch, dass der Benutzer eine sofortige Verfügbarkeit des Verbrauchers 7 anfordert, um ihn unabhängig von einer Planung der Zuteilung der elektrischen Leistung des Stromgenerators 8 durch die zentrale Steuerung 11 sofort einschalten zu können. Der Doppelanschluss 18 für die Verbraucher 2 und 3 ist im Kern ein doppelter Einzelanschluss für zwei Verbraucher, in dem die Messeinrichtungen für beide angeschlossenen Verbraucher 2 und 3 genutzt werden. Dabei kann der Doppelanschluss 18 zu einem Zeitpunkt den Betrieb nur eines oder auch beider Verbraucher 2 und 3 ermöglichen. Für Benutzervoranmetdungen für den Betrieb der Verbraucher 2 und 3 ist die Eingabeeinrichtung 19 vorgesehen, die hier direkt mit der zentralen Steuerung 11 kommuniziert, aber auch über den Doppelanschluss 18 mit der zentralen Steuerung 11 kommunizieren könnte. Über die Eingabeeinrichtung 19, die in Zusammenhang mit Fig. 5 näher erläutert wird, kann beispielsweise ein gewünschter Zeitraum für den Betrieb der Verbraucher 2 und/oder 3 als Benutzervorgabe eingegeben werden. Benutzervoranmeldungen sind hier nur ein Beispiel für Benutzerzielvorgaben, die ein Benutzer der Verbraucher 2 bis 7 über eine Eingabeeinrichtung in die zentrale Steuerung 11 eingeben kann. Eine solche Zielvorgabe kann der maximale Eigenverbrauch der von dem Stromgenerator 8 bereitgestellten elektrischen Leistung ohne oder mit nur geringer Belastung des öffentlichen Stromnetzes 10 sein. An den Verbrauchern 2 und 3 sind Betätigungselemente 25 für Einschaltknöpfe 26 montiert, die hier von der Eingabeeinheit 19 aus angesteuert werden, aber auch direkt von der zentralen Steuerung 11 oder über den Doppelanschluss 18 angesteuert werden könnten. Die Betätigungselemente 25 erlauben das gezielte Aktivieren der Verbraucher 2 und 3, wenn deren Aktivierung über einfaches Zuschalten des Stroms nicht möglich ist. Eine andere Aktivierung als über einfaches Zuschalten des Stroms erfolgt auch bei dem Verbraucher 5, indem die zentrale Steuerung 11 über den Einzelanschluss 15 mit der Steuerung 27 des Verbrauchers 5 kommuniziert und ihn so zu einem von ihr festgelegten Zeitpunkt zum Start oder auch zur Unterbrechung seines Betriebs veranlasst. Eine derartige Steuerung 27 mit Schnittstelle zur externen Kommunikation ist aber bei vielen Verbrauchern, insbesondere älteren Haushaltsgeräten, nicht vorhanden. Durch die Schaltbarkeit der Einzelanschlüsse 14 bis 17 bzw. des Doppelanschlusses 18 und die Ansteuerung von Betätigungselementen 25 für Einschaltknöpfe 26 kann die Steuereinheit aber auch den Verbrauch von Verbrauchern ohne eine solche Steuerung 27 zeitlich steuern. Weitere, hier nur exemplarisch dargestellte Verbraucher 43 können über weitere Einzelanschlüsse 44 ohne eigenen Mess- oder Steuerungsmöglichkeiten in dem Stromnetz 1 mit elektrischer Leistung versorgt werden, wobei der zeitliche Verlauf der von diesen Verbrauchern aufgenommenen Leistung sich im zeitlichen Verlauf der Daten des Stromzählers 12 bzw. 9 abbildet und für das weitere Verfahren verwendet werden kann. Mit dem Speicher 45 kann wie mit dem öffentlichen Stromnetz 10 elektrische Leistung bidirektional ausgetauscht werden. Während jedoch die Leistungsaufnahme- und -abgabekapazität des öffentlichen Stromnetzes 10 quasi unbegrenzt sind, sind die entsprechenden Kapazitäten des Speichers 45 begrenzt und hängen beispielsweise von der Art und der Anzahl seiner Batterien ab. Die Energiemanagementeinrichtung 46 des Speichers 45 verwaltet diese Kapazitäten und übermittelt die Bedingungen einer Zwischenspeicherung von elektrischer Leistung in dem Speicher 45 an die zentrale Steuerung 11.

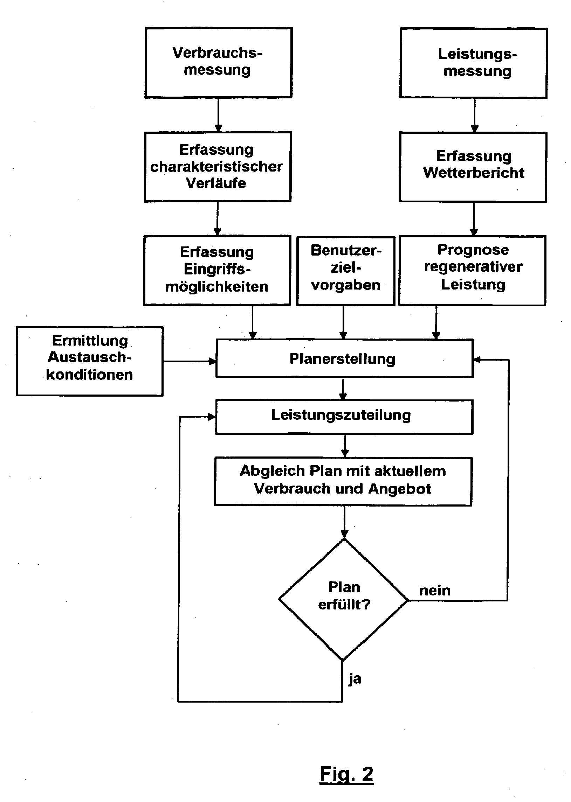

Fig. 2 illustriert ein Verfahren, nach dem die zentrale Steuerung 11 gemäß Fig. 1 vorgehen kann, um von einem Benutzer gesetzte Zielvorgaben, wie beispielsweise einen maximalen Eigenverbrauch der von dem Stromgenerator 8 bereitgestellten Leistung ohne Belastung des öffentlichen Stromnetzes 10 unter Berücksichtigung der Benutzervoranmeldungen zu erreichen. Die zentrale Steuerung 11 führt zunächst Messungen des Verbrauchs von elektrischer Leistung durch die einzelnen Verbraucher durch. Dies geschieht vorzugsweise mit einer Abtastrate von mindestens 0,1 Hz. Auch deutlich höhere Abtastraten bei der Verbrauchsmessung sind sinnvoll. So sind Abtastraten von mindestens 100 Hz, d. h. einmal pro Halbwelle eines üblichen Wechselstroms, der in dem jeweiligen Stromnetz fließt, oder sogar im kHz-Bereich bevorzugt. Die Verbrauchsmessungen dienen dazu, charakteristische Verläufe des Verbrauchs von elektrischer Leistung durch die einzelnen Verbraucher festzustellen. Diese charakteristischen Verläufe bestimmen einerseits die zu erwartende Leistungsaufnahme der einzelnen Verbraucher zu bestimmten zukünftigen Zeitpunkten nach ihrem Einschalten, und andererseits stellen sie auch eine Identifizierungsmöglichkeit für die einzelnen Verbraucher dar. Für beide Aspekte ist eine hohe zeitliche Auflösung des Verlaufs des Verbrauchs von erheblichem Vorteil. Basierend auf einer Identifizierung eines Verbrauchers aufgrund des charakteristischen Verlaufs seines Verbrauchs kann erfasst werden, welche Eingriffsmöglichkeiten in den Verbrauch von elektrischer Leistung durch die einzelnen Verbraucher bestehen. Diese Eingriffsmöglichkeiten werden insbesondere aus einer externen Datenbank abgerufen. Dabei kann der Abruf statt auf dem charakteristischen Verlauf des Verbrauchs des einzelnen Verbrauchers auch basierend auf einer vom Benutzer oder einer Steuerung des Verbrauchers angegebenen Identifizierung des Verbrauchers erfolgen. Zu den Eingriffsmöglichkeiten, die bei einem Verbraucher zur Verfügung stehen können, gehört es, das der Verbraucher zu einem Zeitpunkt, zu dem mehr elektrische Leistung zur Verfügung steht, als momentan benötigt wird, verfrüht betrieben werden kann, um beispielsweise eine erst später erforderliche Erzeugung von Kälte oder Wärme vorwegzunehmen. Diese Vorwegnahme der Erzeugung von Kälte oder Wärme kann sehr sinnvoll sein, wenn sie einen Leistungsbedarf desselben Verbrauchers zu einem späteren Zeitpunkt, zu dem die von dem Stromgenerator verfügbare Leistung knapp ist, vorwegnimmt. So können Kühl- oder Gefrierschränke auf eine geringer Temperatur als eigentlich momentan erforderlich abgekühlt werden; eine übermäßige Unterkühlung, die z. B. zu Eisbildung in einem Kühlschrank führt, ist aber zu vermeiden.

Die charakteristischen Verläufe des Verbrauchs der einzelnen Verbraucher und die Eingriffsmöglichkeiten in diese Verläufe bilden eine Grundlage für die Erstellung eines Plans, nach dem die zentrale Steuerung in einem in der Zukunft liegenden Zeitraum den einzelnen Verbrauchern elektrische Leistung zuteilt. Eine andere Grundlage dieser Planerstellung ist eine Prognose der Leistung, die in diesem zukünftigen Zeitraum von dem Stromgenerator zur Verfügung gestellt wird. Diese Prognose basiert vorzugsweise ebenfalls auf Messungen, nämlich Leistungsmessungen des Generators, die in Verbindung mit den zugehörigen Wetterlagen (und im Falle eines Solarstromgenerators auch den zugehörigen Sonnenständen) ausgewertet werden und aus denen unter Berücksichtigung aktueller Wettervorhersagen die Leistungsprognosen für die Zukunft abgeleitet werden. Weiterhin basiert die Planerstellung auf den Benutzerzielvorgaben und den Bedingungen des bidirektionalen Austausches von elektrischer Energie mit dem Speicher 45 und dem öffentlichen Stromnetz 10 gemäß Fig. 1. Der Plan für die zukünftige Zuteilung der elektrischen Leistung umfasst einerseits eine Abstimmung der Zeitpunkte, zu denen die einzelnen Verbraucher eingeschaltet werden, aber andererseits auch eine Deformation des charakteristischen Verlaufs des Verbrauchs von elektrischer Leistung durch die einzelnen Verbraucher, um insbesondere durch Verbraucher mit oszillierendem Verbrauch an elektrischer Leistung nicht das Angebot an elektrischer Leistung von dem Stromgenerator zu überschreiten, auch nicht kurzzeitig. Im Idealfall wird so ein Betrieb des lokalen Stromnetzes ohne auch nur kurzzeitigen Bedarf an elektrischer Leistung aus dem öffentlichen Stromnetz möglich. Da Planabweichungen jedoch sowohl durch nicht vorhergesagte Wetteränderungen als auch durch nicht eingeplante Anforderungen des Betriebs einzelner Verbraucher durch einen Benutzer nicht ausgeschlossen werden können, wird fortlaufend durch Abgleich des Angebots an elektrischer Leistung und des Verbrauchs an elektrischer Leistung überprüft, ob der Plan wird und damit die Benutzerzielvorgaben eingehalten werden. Wenn dies nicht der Fall ist, erfolgt eine Anpassung, d. h. Aktualisierung des Plans.

Fig. 3 zeigt die Vorderseite der Eingabeeinrichtung 24 gemäß Fig. 1. Diese weist einen ersten Wahlschalter 28 für das Anwählen eines von der zentralen Steuerung 11 gemäß Fig. 1 festgelegten Betriebs "Auto" oder eines hiervon unabhängigen Betriebs "Bereit" auf. Über einen zweiten Wahlschalter 29 kann der zugeordnete Verbraucher 7 im Betrieb "Auto" für einen durch die zentrale Steuerung 11 festzulegenden Zeitpunkt eingeschaltet werden, bzw. im Betrieb "Bereit" sofort gestartet werden. Eine Statusanzeige 30 ermöglicht eine Überwachung der Eingabe über die Wahlschalter 28 und 29. Eine Einschaltzeitpunktanzeige 31 zeigt an, nach welcher Zeit der Verbraucher voraussichtlich von der zentralen Steuerung 11 eingeschaltet werden wird. Mit Hilfe dieser Einschaltzeitpunktanzeige kann vom Benutzer aber auch ein eine Benutzervoranmeldung, hier in Form ein Zeitrahmens, eingegeben werden, binnen dessen der Verbraucher von der zentralen Steuerung 11 zu starten ist.

Fig. 4 zeigt die Vorderansicht einer Eingabeeinrichtung 32 für einen Kühlschrank als Verbraucher. Hier sind dieselben Wahlschalter 28 und 29 wie in Fig. 3 vorgesehen. Auch die Statusanzeige 30 ist vergleichbar. Zur Einschaltzeitpunktanzeige 31 kommt hier jedoch noch eine Temperaturanzeige 33 hinzu, mit deren Hilfe der Benutzer die Zieltemperatur des Kühlschranks auswählen kann und über die ihm die aktuelle Temperatur des Kühlschranks angezeigt werden kann, sowie eine Türöffnungsanzeige 34, die den Meldezustand eines Türöffnungssensors anzeigt. Ein solcher Türöffnungssensor kann bei einem von der zentralen Steuerung gesteuerten Kühlschrank, der nicht dauerhaft selbst mit Strom versorgt wird, zur Einschaltung eines Ersatzinnenraumlichts verwendet werden und zum Anzeigen, dass wegen der durch die Türöffnungszeit eingetretenen Erwärmung des Innenraums des Kühlschranks eine Versorgung des Kühlschranks mit elektrischer Leistung in nächster Zeit ansteht. Die Eingabeeinrichtung 32 kann direkt die Ersatzlichtquelle 35 für den Innenraum des Kühlschranks, einen Temperatursensor und den Türöffnungssensor umfassen und entsprechend für die Anordnung in dem jeweiligen Kühlschrank vorgesehen sein. Es versteht sich, dass das eigene Regelthermostat des jeweiligen Kühlschranks auf die kälteste zulässige Temperatur einzustellen ist, damit die Steuereinrichtung die Temperaturregelung mithilfe des Temperatursensors übernehmen und dabei sowohl vorkühlen als auch vorübergehende geringe Überschreitungen der Zieltemperatur hinnehmen kann.

Fig. 5 zeigt die Vorderseite der Eingabeeinrichtung 19 gemäß Fig. 1, wobei diese Eingabeeinrichtung 19 zusätzlich für ein drittes Gerät ausgelegt ist. Über einen Geräteauswahlschalter 36 kann das Gerät ausgewählt werden, für das jeweils eine Benutzeranforderung eingegeben wird. Die angewählte Einschaltzeit wird von der Einschaltzeitpunktanzeige 31 für jedes Gerät separat angegeben, wobei die Form der Angabe hier wie in Fig. 4, aber anders als in Fig. 3, durch einen linearen Zeitbalken ausgeführt ist.

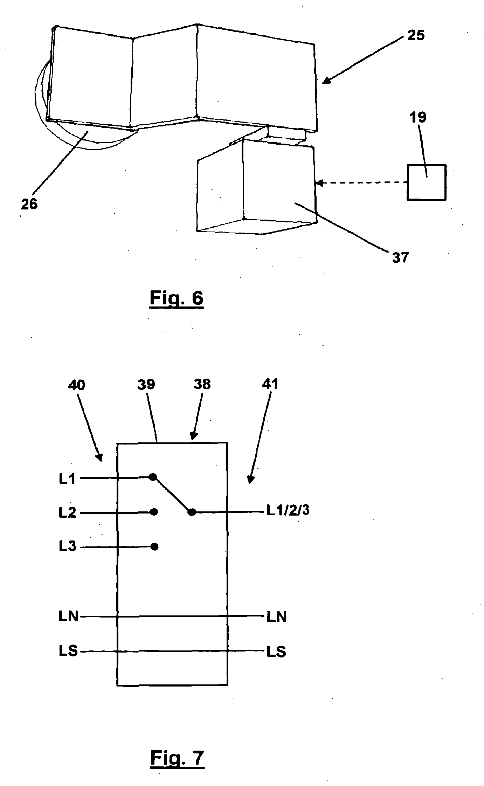

**Fig. 6** zeigt in vergrößerter Darstellung eines der Betätigungselemente 25 für einen Einschaltknopf 26 eines Verbrauchers gemäß Fig. 1. Das Betätigungselement 25 weist einen ansteuerbaren Antrieb 37 auf, der hier über die Eingabeeinrichtung 19 angesteuert wird. Bei Ansteuerung drückt das Betätigungselement 25 den Einschaltknopf 26, um beispielsweise eine vom Benutzer vorprogrammierte Waschmaschine zu einem von der zentralen Steuerung 11 gemäß Fig. 1 festgelegten Zeitpunkt zu starten. Während des Ablaufs des Programms der Wachmaschine kann die Steuerung 11 dann weiter über den jeweiligen Anschluss die Zufuhr elektrischer Leistung, zum Beispiel vorübergehend während einer Heizphase, gezielt begrenzen, um den von ihr konzipieren Plan der Verteilung elektrischer Leistung über die einzelnen Verbraucher einzuhalten.

**Fig. 7** zeigt einen von der zentralen Steuerung 11 gemäß Fig. 1 ansteuerbaren Einzelanschluss 38 für einen einzelnen Verbraucher, der alle Merkmale aufweist, wie sie zu den Einzelanschlüssen 14 bis 17 in Fig. 1 erläutert wurden. Darüber hinaus hat der Einzelanschluss 38 die Funktion eines Adapters 39 zwischen einem dreiphasigen Wechselstromeingang 40 und einem einphasigen Wechselstromausgang 41. Dabei ist der Außenleiter des einphasigen Wechselstromausgangs 41 wahlweise auf einen der Außenleiter des dreiphasigen Wechselstromeingangs 40 schaltbar. So kann die zentrale Steuerung durch Aufschalten einphasiger Verbraucher auf bestimmten Phasen eines dreiphasigen Wechselstromes, den der Stromgenerator bereitstellt, oder auch durch Umschalten zwischen den Phasen Schieflasten vermeiden, die im Extremfall dazu führen, dass aus dem lokalen Stromnetz 1 gemäß Fig. 1 über eine Phase elektrische Leistung in das öffentliche Stromnetz 10 eingespeist wird, während über eine andere Phase elektrische Leistung aus dem öffentlichen Stromnetz 10 bezogen wird.

### BEZUGSZEICHENLISTE

- 1: lokales Stromnetz
- 2: Verbraucher
- 3: Verbraucher
- 4: Verbraucher
- 5: Verbraucher
- 6: Verbraucher
- 7: Verbraucher
- 8: Stromgenerator
- 9: Netzanschlusspunkt
- 10: öffentliches Stromnetz
- 11: zentrale Steuerung
- 12: Leistungsmesser
- 13: Stromzähler
- 14: Einzelanschluss
- 15: Einzelanschluss
- 16: Einzelanschluss
- 17: Einzelanschluss
- 18: Doppelanschluss
- 19: Eingabeeinrichtung
- 20: Datenbank
- 21: Quelle für Wetterberichte
- 22: Quelle für Stromtarife
- 23: Sensor
- 24: Eingabeeinrichtung
- 25: Betätigungselement
- 26: Einschaltknopf
- 27: Steuerung
- 28: Wahlschalter
- 29: Wahlschalter
- 30: Statusanzeige
- 31: Einschaltzeitpunktanzeige
- 32: Eingabeeinrichtung
- 33: Temperaturanzeige
- 34: Türöffnungsanzeige
- 35: Lichtquelle
- 36: Geräteauswahlschalter
- 37: Antrieb
- 38: Einzelanschluss
- 39: Adapter
- 40: dreiphasiger Wechselstromeingang
- 41: einphasiger Wechselstromausgang
- 42: Internet
- 43: Verbraucher
- 44: Einzelanschluss
- 45: Speicher
- 46: Energiemanagementeinrichtung

## Patentansprüche

1. Verfahren zum Optimieren eines zeitlichen Verlaufs eines Verbrauchs von elektrischer Leistung durch eine Gruppe von unterschiedlichen Verbrauchern (2 bis 7) mit Hilfe einer zentralen Steuerung (11) in Hinblick auf ein Angebot an elektrischer Leistung, das elektrische Leistung von mindestens einem Wind- oder Solarstromgenerator (8) sowie Leistung umfasst, die bidirektional mit einem Speicher für elektrische Energie und/oder einem öffentlichem Stromnetz ausgetauscht wird,
- wobei ein Verbrauch von elektrischer Leistung gemessen wird, um charakteristische zeitliche Verläufe des Verbrauchs von elektrischer Leistung durch die einzelnen Verbraucher (2 bis 7) zu ermitteln;
- wobei eine Prognose zum zeitlichen Verlauf des Angebots an elektrischer Leistung von dem mindestens einen Stromgenerator (8) für einen in der Zukunft liegenden Zeitraum erstellt wird;
- wobei basierend auf der Prognose und den charakteristischen zeitlichen Verläufen des Verbrauchs der einzelnen Verbraucher (2 bis 7) ein Plan für eine Zuteilung von elektrischer Leistung an die einzelnen Verbraucher (2 bis 7) über den in der Zukunft liegenden Zeitraum erstellt wird; und
- wobei in dem Zeitraum den einzelnen Verbrauchern (2 bis 7) elektrische Leistung nach dem Plan durch die zentrale Steuerung (11) zugeteilt wird,
**dadurch gekennzeichnet, dass** der Plan weiterhin basierend auf
- Bedingungen des bidirektionalen Austausches elektrischer Leistung mit dem Speicher für elektrische Energie und/oder dem öffentlichem Stromnetz (10) in dem in der Zukunft liegenden Zeitraum und
- mindestens einer globalen Benutzerzielvorgabe,
- die zu einer unterschiedlichen Gewichtung des Verbrauchs von elektrischer Leistung durch unterschiedliche Verbraucher und/oder des Angebots von elektrischer Leistung aus unterschiedlichen Quellen in dem in der Zukunft liegenden Zeitraum führt und
- die ein Ziel vorgibt, welches durch konzertierte Aktion aller Verbraucher, Stromgeneratoren, Speicher und des öffentlichen Stromnetzes angestrebt wird,
erstellt und fortlaufend auf Basis eines tatsächlichen Angebots an elektrischer Leistung von dem mindestens einen Stromgenerator (8) und eines tatsächlichen Verbrauchs von elektrischer Leistung durch die einzelnen Verbraucher (2 bis 7) aktualisiert wird.

2. Verfahren nach Anspruch 1, **dadurch gekennzeichnet,**
- **dass** die unterschiedliche Gewichtung des Verbrauchs von elektrischer Leistung durch unterschiedliche Verbraucher (2 bis 7) unterschiedliche Gewichtungsfaktoren für die durch die unterschiedlichen Verbraucher (2 bis 7) verbrauchte elektrische Leistung und/oder deren Kosten in dem in der Zukunft liegenden Zeitraum umfasst und/oder
- **dass** die unterschiedliche Gewichtung des Angebots von elektrischer Leistung aus unterschiedlichen Quellen unterschiedliche Gewichtungsfaktoren für die verbrauchte elektrische Leistung aus den unterschiedlichen Quellen und/oder deren Kosten in dem in der Zukunft liegenden Zeitraum umfasst.

3. Verfahren nach Anspruch 2, **dadurch gekennzeichnet, dass** die Gewichtungsfaktoren für die verbrauchte elektrische Leistung und/oder deren Kosten in dem in der Zukunft liegenden Zeitraum variieren, wobei die Variation eine Funktion der Zeit ist.

4. Verfahren nach einem der Ansprüche 2 und 3, **dadurch gekennzeichnet, dass** die Gewichtungsfaktoren
- für verschiedene zugleich geltende Benutzerzielvorgaben vor ihrer Anwendung aufaddiert werden und/oder
- für verschiedene Benutzerzielvorgaben Gewichtungsgrundfaktoren aufweisen, die auf einen gemeinsamen Standard normiert sind, der einer gleichen Wichtigkeit der verschiedenen Benutzerzielvorgaben entspricht, und/oder
- für jede von verschiedenen zugleich geltenden Benutzerzielvorgaben einen festen Wichtigkeitsfaktor aufweisen, der der relativen Wichtigkeit der Benutzerzielvorgabe gegenüber den anderen zugleich geltenden Benutzerzielvorgaben entspricht.

5. Verfahren nach einem der Ansprüche 2 bis 4, **dadurch gekennzeichnet, dass** eine Summe der gewichteten verbrauchten elektrischen Leistung und/oder eine Summe der gewichteten Kosten der verbrauchten elektrischen Leistung beim Erstellen des Plans für die Zuteilung von elektrischer Leistung an die einzelnen Verbraucher (2 bis 7) begrenzt oder minimiert wird.

6. Verfahren nach einem der vorhergehenden Ansprüche, **dadurch gekennzeichnet, dass** die mindestens eine Benutzerzielvorgabe ausgewählt ist aus:
- einer Maximierung eines Eigenverbrauchs der von dem mindestens einen Stromgenerator (8) generierten elektrischen Leistung,
- einer Minimierung oder Begrenzung von Kosten für die von den Verbrauchern (2 bis 7) verbrauchte elektrische Leistung;
- einer Minimierung oder Begrenzung eines Bezugs von elektrischer Leistung aus dem öffentlichen Stromnetz (10);
- einer Minimierung oder Begrenzung von Abweichungen zwischen einer Start- und/oder Endzeit des Betriebs eines Verbrauchers (2 bis 7) von einer Zeitvorgabe; und
- einer Minimierung oder Begrenzung einer Abweichung einer mit Hilfe der Verbraucher (2 bis 7) eingestellten Temperatur von einer Wunschtemperatur in einem bestimmten Zeitfenster innerhalb des in der Zukunft liegenden Zeitraums.

7. Verfahren nach einem der vorhergehenden Ansprüche, **dadurch gekennzeichnet, dass**
- eine weitere Prognose zum zeitlichen Verlauf von Bedingungen eines Bezugs von elektrischer Leistung aus dem öffentlichen Stromnetz (10) für den in der Zukunft liegenden Zeitraum erstellt und beim Erstellen des Plans für die Zuteilung von elektrischer Leistung berücksichtigt wird und/oder
- eine weitere Prognose zum zeitlichen Verlauf von Bedingungen einer Einspeisung von elektrischer Leistung in das öffentliche Stromnetz (10) für den in der Zukunft liegenden Zeitraum erstellt und beim Erstellen des Plans für die Zuteilung von elektrischer Leistung berücksichtigt wird,
wobei
- Auswirkungen einer alternativen Bereitstellung eines gleichen Ergebnisses unter anderen Bedingungen des Bezugs von elektrischer Leistung aus dem öffentlichen Stromnetz (10) und/oder der Einspeisung von elektrischer Leistung in das öffentliche Stromnetz (10) für den in der Zukunft liegenden Zeitraum oder einen in der Vergangenheit liegenden Zeitraum bestimmt werden; und/oder
- dass Auswirkungen einer alternativen Bereitstellung eines gleichen Ergebnisses durch einen anderen derzeit nicht vorhandenen Verbraucher oder Stromgenerator oder eine andere derzeit nicht vorhandene Einrichtung für den in der Zukunft liegenden Zeitraum oder einen in der Vergangenheit liegenden Zeitraum bestimmt werden.

8. Verfahren nach einem der vorhergehenden Ansprüche, **dadurch gekennzeichnet, dass** eine weitere Prognose
- zum zeitlichen Verlauf von Bedingungen eines Bezugs von elektrischer Leistung aus dem öffentlichen Stromnetz (10) und/oder
- zum zeitlichen Verlauf von Bedingungen einer Einspeisung von elektrischer Leistung in das öffentliche Stromnetz (10) und/oder
- zum zeitlichen Verlauf von Bedingungen einer Zwischenspeicherung von elektrischer Leistung in dem Speicher für elektrische Energie und/oder
- zum zeitlichen Verlauf von Bedingungen eines Transfers von elektrischer Leistung zu und von mindestens einer anderen Gruppe von Verbrauchern und/oder Stromgeneratoren und/oder
- zum zeitlichen Verlauf von Bedingungen einer alternativen Bereitstellung eines gleichen Ergebnisses durch einen anderen vorhandenen Verbraucher oder Stromgenerator oder eine andere vorhandene Einrichtung
fürden in der Zukunft liegenden Zeitraum erstellt und beim Erstellen des Plans für die Zuteilung von elektrischer Leistung berücksichtigt wird.

9. Verfahren nach einem der vorhergehenden Ansprüche, **dadurch gekennzeichnet,**
- **dass** über eine bidirektionale Datenbankanbindung charakteristische zeitliche Verläufe des Verbrauchs von elektrischer Leistung durch die einzelnen Verbraucher (2 bis 7) in eine externe Datenbank (20) hochgeladen und/oder von dort heruntergeladen werden; und/oder
- **dass** eine Summe des Verbrauchs von elektrischer Leistung durch mehrere Verbraucher (44) an einem Stromzähler (13) gemessen wird; und/oder
- **dass** der Verbrauch von elektrischer Leistung durch mindestens einen einzelnen Verbraucher (2 bis 7) an seinem Einzelanschluss (14 bis 17, 38) gemessen wird; und/oder
- **dass** die einzelnen Verbraucher (2 bis 7) und/oder ihr Anschluss an einen bestimmten Einzelanschluss (14 bis 17, 38) durch ihren charakteristischen zeitlichen Verlauf des Verbrauchs von elektrischer Leistung identifiziert werden; und/oder
- **dass** die einzelnen Verbraucher (2 bis 7) durch Vergleich des tatsächlichen zeitlichen Verlaufs ihres Verbrauchs von elektrischer Leistung mit dem charakteristischen zeitlichen Verlauf ihres Verbrauchs von elektrischer Leistung auf ordnungsgemäße Funktion überwacht werden.

10. Verfahren nach einem der vorhergehenden Ansprüche, **dadurch gekennzeichnet, dass** der Verbrauch von elektrischer Leistung mit einer Abtastrate von mindestens 0,1 Hz, insbesondere von mindestens 1 Hz, insbesondere von mindestens 10 Hz oder mindestens 100 Hz oder mindestens 1 kHz, gemessen wird.

11. Verfahren nach einem der vorhergehenden Ansprüche, **dadurch gekennzeichnet, dass** in dem Zeitraum die Zuteilung elektrischer Leistung an die einzelnen Verbraucher (2 bis 7) mit einer Taktrate von mindestens 0,1 Hz, insbesondere von mindestens 1 Hz oder mindestens 10 Hz oder mindestens 100 Hz nach dem Plan eingestellt wird.

12. Verfahren nach einem der vorhergehenden Ansprüche, **dadurch gekennzeichnet, dass** die Zuteilung von elektrischer Leistung an die einzelnen Verbraucher (2 bis 7) für mindestens einen einzelnen Verbraucher
- eine Begrenzung der durch ihn maximal verbrauchbaren Leistung und/oder
- eine Nivellierung der durch ihn verbrauchten Leistung über mindestens einen Teilzeitraum des Zeitraums
umfasst.

13. Verfahren nach einem der vorhergehenden Ansprüche, **dadurch gekennzeichnet, dass** die Zuteilung von elektrischer Leistung an die einzelnen Verbraucher (2 bis 7)
- für mindestens einen einzelnen Verbraucher über einen schaltbaren Einzelanschluss (14 bis 17, 38) und/oder
- für mindestens einen einzelnen Verbraucher durch das gezielte Aktivieren des einzelnen Verbrauchers mittels eines an den einzelnen Verbraucher montierten ansteuerbaren Betätigungselements (25) für einen Einschaltknopf (26) des einzelnen Verbrauchers und/oder
- für mindestens einen einzelnen Verbraucher durch Ansteuerung einer Schnittstelle einer Steuerung (27) des einzelnen Verbrauchers und/oder
- aus einem dreiphasigen Angebot an einzelne einphasige Verbraucher nach dem Plan über die drei Phasen des Angebots verteilt erfolgt.

14. Verfahren nach einem der vorhergehenden Ansprüche, **dadurch gekennzeichnet, dass**
- weitere aktuelle elektrische Kenndaten mindestens einen einzelnen Verbrauchers (2 bis 7) von seinem Einzelanschluss (14 bis 17, 38) aus und/oder
- weitere aktuelle physikalische Kenndaten mindestens einen einzelnen Verbrauchers (2 bis 7) mit Sensoren (23)
gemessen und bei Aktualisierungen des Plans berücksichtigt werden.

15. Vorrichtung zum Optimieren eines zeitlichen Verlaufs eines Verbrauchs von elektrischer Leistung durch eine Gruppe von unterschiedlichen Verbrauchern (2 bis 7) in Hinblick auf ein Angebot an elektrischer Leistung, das elektrische Leistung von mindestens einem Wind- oder Solarstromgenerator (8) sowie Leistung umfasst, die bidirektional mit einem Speicher für elektrische Energie und/oder einem öffentlichem Stromnetz ausgetauscht wird, wobei die Vorrichtung eine zentrale Steuerung aufweist, die so konfiguriert ist, das sie das Verfahren nach einem der vorhergehenden Ansprüche unter Verwendung von den Verbrauch messenden Messeinrichtungen durchführt.

## Claims

1. Method of optimizing a chronological development of a consumption of electric power by a group of different consumers (2 to 7) by means of a central controller (11) with regard to a supply of electric power, which includes electric power from at least one wind or solar current generator (8) as well as power which is bidirectional exchanged with a storage for electric power and/or a public power grid,
- wherein a consumption of electric power is measured to determine characteristic chronological developments of the consumption of electric power by the individual consumers (2 to 7);
- wherein a prognosis of the chronological development of the supply of electric power by the at least one current generator (8) is made for a future period of time;
- wherein, based on the prognosis and the characteristic chronological developments of the consumption of the individual consumers (2 to 7), a plan is made for an apportionment of electric power to the individual consumers (2 to 7) over the future period of time; and
- wherein, within the period of time, electric power is apportioned to the individual consumers (2 to 7) by the central controller (11) according to the plan,
**characterized in that** the plan is further made based on
- conditions of the bidirectional exchange of electric power with the storage for electric power and/or the public power grid (10) within the future period of time, and
- at least one global user goal setting
- which results in different weightings of the consumption of electric power by different consumers and/or the supply of electric power from different sources within the future period of time, and
- which sets a goal which is striven for by concerted action of all consumers, current generators, storages and the public power grid, and
continuously updated on basis of the actual supply of electric power by the at least one current generator (8) and an actual consumption of electric power by the individual consumers (2 to 7).

2. Method of claim 1, **characterized in**
- **that** the different weightings of the consumption of electric power by the different consumers (2 to 7) includes different weighting factors for the electric power consumed by the different consumers (2 to 7) and/or its cost within the future period of time and/or
- **that** the different weightings of the supply of electric power by the different sources includes different weighting factors for the consumed electric power from the different sources and/or its cost within the future period of time.

3. Method of claim 2, **characterized in that** the weighting factors for the consumed electric power and/or its cost vary within the future period of time, wherein the variation is a function of time.

4. Method of any of claims 2 and 3, **characterized in that** the weighting factors
- for different simultaneously applicable user goal settings are added up prior to their application, and/or
- comprise basic weighting factors for different user goal settings, which are normalized to a common standard corresponding to a same importance of the different user goal settings, and/or
- comprise a fixed importance factor for each of the different simultaneously applicable user goal settings, which corresponds to the relative importance of the user goal setting with regard to the other simultaneously applicable user goal settings.

5. Method of any of the claims 2 to 4, **characterized in that** a sum of the weighted consumed electric power and/or a sum of the weighted costs of the consumed electric power is limited or minimized in making the plan for the apportionment of electric power to the individual consumers (2 to 7).

6. Method of any of the preceding claims, **characterized in that** the at least one user goal setting is selected from:
- a maximization of a local consumption of the electric power generated by the at least one current generator (8),
- a minimization or limitation of costs of the electric power consumed by the consumers (2 to 7);
- a minimization or limitation of an import of electric power from the public power grid (10);
- a minimization or limitation of deviations of a start and/or end time of the operation of a consumer (2 to 7) from a time setting; and
- a minimization or limitation of a deviation of a temperature adjusted by means of the consumers (2 to 7) from a desired temperature within a certain time frame within the future period of time.

7. Method of any of the preceding claims, **characterized in that**
- a further prognosis with regard to the chronological development of conditions of an import of electric power from the public power grid (10) for the future period of time is made and considered in making the plan for the apportionment of electric power and/or
- a further prognosis with regard to the chronological development of conditions of feeding electric power into the public power grid (10) for the future period of time is made and considered in making the plan for the apportionment of electric power,
wherein
- effects of an alternative provision of a same result under other conditions of the import of electric power from the public power grid (10) and/or the feeding of electric power into the public power grid (10) for the future period of time or a past period of time are determined; and/or
- that effects of an alternative provision of a same result by another, presently not existing consumer or current generator or any other presently not existing device are determined for the future period of time or a past period of time.

8. Method of any of the preceding claims, **characterized in that** a further prognosis
- with regard to the chronological development of conditions of an import of electric power from the public power grid (10) and/or
- with regard to the temporal development of conditions of feeding electric power into the public power grid (10) and/or
- with regard to the chronological development of conditions of an intermediate storage of electric power in the storage for electric energy and/or
- with regard to the chronological development of conditions of a transfer of electric power to and from at least one other group of consumers and/or current generators, and/or
- with regard to the chronological development of conditions of an alternative provision of a same result by any other presently existing consumer or current generator or any other existing device is made for the future period of time and considered in making the plan for the apportionment of electric power.

9. Method of any of the preceding claims, **characterized in**
- **that**, via a bidirectional data bank connection, characteristic chronological developments of the consumption of electric power by the individual consumers (2 to 7) are uploaded into an external data bank (20) and/or downloaded from there; and/or
- **that** a sum of the consumption of electric power by a plurality of consumers (44) is measured at a current meter (13); and/or
- **that** the consumption of electric power by at least one individual consumer (2 to 7) is measured at its single connector (14 to 17, 38); and/or
- **that** the individual consumers (2 to 7) and/or their connection to a certain single connector (14 to 17, 38) are identified by their characteristic chronological development of the consumption of electric power; and/or
- **that** the individual consumers (2 to 7) are surveyed for proper function by comparing the actual chronological development of their consumption of electric power with the characteristic chronological development of their consumption of electric power.

10. Method of any of the preceding claims, **characterized in that** the consumption of electric power is measured at a sample rate of at least 0.1 Hz, particularly of at least 1 Hz, particularly of at least 10 Hz or at least 100 Hz or at least 1 kHz.

11. Method of any of the preceding claims, **characterized in that**, with in the period of time, the apportionment of electric power to the individual consumers (2 to 7) according to the plan is adjusted at a clock rate of at least 0.1 Hz, particularly of at least 1 Hz or at least 10 Hz or at least 100 Hz.

12. Method of any of the preceding claims, **characterized in that**, for at least one individual consumer, the apportionment of electric power to the individual consumers (2 to 7) includes
- a limitation of the power which may consumed by it at maximum and/or
- leveling of the power consumed by it over at least a part of the period of time.

13. Method of any of the preceding claims, **characterized in that** the apportionment of electric power to the individual consumers (2 to 7) takes place
- for at least one individual consumer, via a switchable single connector (14 to 17, 38), and/or
- for at least one individual consumer, by purposefully activating the individual consumer by means of an operating element (25) for a switch-on button (26) of the individual consumer, which is mounted to the individual consumer, and/or
- for at least one individual consumer, by controlling an interface of a controller (27) of the individual consumer, and/or
- out of a three phase supply to individual single phase consumers according to the plan distributed over the three phases of the supply.

14. Method of any of the preceding claims, **characterized in that**
- further present electric characteristics of at least one individual consumer (2 to 7) are measured from its single connector (14 to 17, 38), and/or
- further present physical characteristics of at least one individual consumer (2 to 7) are measured with sensors (23), and considered in updating the plan.

15. Apparatus for optimizing at a chronological development of a consumption of electric power by a group of different consumers (2 to 7) with regard to a supply of electric power, which includes electric power from at least one wind or solar current generator (8) as well as power which is bidirectional exchanged with a storage for electric energy and/or a public power grid, wherein the apparatus comprises a central controller which is configured in such way that it executes the method of any of the preceding claims using measurement devices measuring the consumption.

## Revendications

1. Procédé destiné à optimiser à l'aide d'un contrôleur central (11) une évolution dans le temps d'une consommation de puissance électrique par un groupe de consommateurs (2 à 7) différents par rapport à une offre de puissance électrique qui comprend une puissance électrique issue d'au moins un générateur d'électricité éolienne ou solaire (8) et une puissance qui peut être échangée de façon bidirectionnelle avec un accumulateur d'énergie électrique et/ou un réseau électrique public, dans lequel une consommation de puissance électrique est mesurée afin de déterminer les évolutions caractéristiques dans le temps de la consommation de puissance électrique par les consommateurs (2 à 7) individuels ;
- dans lequel une prévision sur l'évolution dans le temps de l'offre de puissance électrique de l'au moins un générateur d'électricité (8) est élaborée pour une période future ;
- dans lequel, sur la base de la prévision et des évolutions caractéristiques dans le temps de la consommation des consommateurs (2 à 7) individuels, un plan est élaboré pour une affectation de puissance électrique aux consommateurs (2 à 7) individuels au cours de la période future ; et
- dans lequel une puissance électrique est affectée par le contrôleur central (11) aux consommateurs (2 à 7) individuels selon le plan au cours de la période,
**caractérisé en ce que** le plan est en outre élaboré sur la base :
- des conditions de l'échange bidirectionnel de puissance électrique avec l'accumulateur d'énergie électrique et/ou le réseau électrique public (10) au cours de la période future, et
- d'au moins un objectif d'utilisation global
- qui entraîne une pondération différente de la consommation depuissance électrique par différents consommateurs et/ou de l'offre de puissance électrique provenant de différentes sources au cours de la période future, et
- qui définit un objectif à atteindre par le biais d'une action concertée de tous les consommateurs, générateurs d'électricité, accumulateurs et du réseau électrique public, et
il est actualisé en permanence sur la base d'une offre effective de puissance électrique de l'au moins un générateur d'électricité (8) et d'une consommation effective de puissance électrique par les consommateurs (2 à 7) individuels.

2. Procédé selon la revendication 1, **caractérisé**
- **en ce que** la pondération différente de la consommation de puissance électrique par différents consommateurs (2 à 7) comprend différents facteurs de pondération pour la puissance électrique consommée par les différents consommateurs (2 à 7) et/ou ses coûts au cours de la période future et/ou
- **en ce que** la pondération différente de l'offre de puissance électrique provenant de différentes sources comprend différents facteurs de pondération pour la puissance électrique consommée à partir des différentes sources et/ou ses coûts au cours de la période future.

3. Procédé selon la revendication 2, **caractérisé en ce que** les facteurs de pondération pour la puissance électrique consommée et/ou ses coûts au cours de la période future varient, étant entendu que la variation est une fonction du temps.

4. Procédé selon l'une des revendications 2 et 3, **caractérisé en ce que** les facteurs de pondération
- sont additionnés avant leur application pour différents objectifs d'utilisation applicables simultanément, et/ou
- présentent, pour différents objectifs d'utilisation, des facteurs de base de pondération qui sont normalisés sur la base d'une norme commune qui correspond à une importance identique des différents objectifs d'utilisation, et/ou
- présentent, pour chacun de différents objectifs d'utilisation applicables simultanément, un facteur d'importance fixe qui correspond à l'importance relative de l'objectif d'utilisation par rapport aux autres objectifs d'utilisation applicables simultanément.

5. Procédé selon l'une des revendications 2 à 4, **caractérisé en ce qu'**une somme de la puissance électrique consommée pondérée et/ou une somme des coûts pondérés de la puissance électrique consommée est limitée ou minimisée lors de l'élaboration du plan relatif à l'affectation de puissance électrique aux consommateurs (2 à 7) individuels.

6. Procédé selon l'une des revendications précédentes, **caractérisé en ce que** l'au moins un objectif d'utilisation est choisi parmi :
- une maximisation d'une consommation propre de la puissance électrique générée par l'au moins un générateur d'électricité (8),
- une minimisation ou une limitation des coûts pour la puissance électrique consommée par les consommateurs (2 à 7),
- une minimisation ou une limitation d'un prélèvement de puissance électrique à partir du réseau électrique public (10),
- une minimisation ou une limitation d'écarts entre un moment de début et/ou de fin du fonctionnement d'un consommateur (2 à 7) par rapport à un objectif de temps, et
- une minimisation ou une limitation d'un écart d'une température réglée à l'aide des consommateurs (2 à 7) par rapport à une température souhaitée dans une fenêtre de temps déterminée à l'intérieur de la période future.

7. Procédé selon l'une des revendications précédentes, **caractérisé**
- **en ce qu'**une prévision supplémentaire sur l'évolution dans le temps de conditions d'un prélèvement de puissance électrique à partir du réseau électrique public (10) est élaborée pour la période future et prise en considération lors de l'élaboration du plan relatif à l'affectation de puissance électrique, et/ou
- **en ce qu'**une prévision supplémentaire sur l'évolution dans le temps de conditions d'une injection de puissance électrique dans le réseau électrique public (10) est élaborée pour la période future et prise en considération lors de l'élaboration du plan relatif à l'affectation de puissance électrique,
étant entendu que
- les répercussions d'une réalisation alternative d'un même résultat dans d'autres conditions du prélèvement de puissance électrique à partir du réseau électrique public (10) et/ou de l'injection de puissance électrique dans le réseau électrique public (10) sont déterminées pour la période future ou une période passée ; et/ou
- les répercussions d'une réalisation alternative d'un même résultat par un autre consommateur ou générateur d'électricité non présent à ce moment ou une autre installation non présente à ce moment sont déterminées pour la période future ou une période passée.

8. Procédé selon l'une des revendications précédentes, **caractérisé en ce qu'**une prévision supplémentaire
- sur l'évolution dans le temps de conditions d'un prélèvement de puissance électrique à partir du réseau électrique public (10) et/ou
- sur l'évolution dans le temps de conditions d'une injection de puissance électrique dans le réseau électrique public (10) et/ou
- sur l'évolution dans le temps de conditions d'un stockage intermédiaire de puissance électrique dans l'accumulateur d'énergie électrique et/ou
- sur l'évolution dans le temps de conditions d'un transfert de puissance électrique vers et depuis au moins un autre groupe de consommateurs et/ou de générateurs d'électricité et/ou
- sur l'évolution dans le temps de conditions d'une réalisation alternative d'un même résultat par un autre consommateur ou générateur d'électricité présent ou une autre installation présente
est élaborée pour la période future et prise en considération lors de l'élaboration du
plan relatif à l'affectation de puissance électrique.

9. Procédé selon l'une des revendications précédentes, **caractérisé**
- **en ce que** des évolutions caractéristiques dans le temps de la consommation de puissance électrique par les consommateurs (2 à 7) individuels sont téléchargées dans une banque de données externe (20) et/ou en sont extraites par le biais d'une connexion bidirectionnelle à une banque de données ; et/ou
- **en ce qu'**une somme de la consommation de puissance électrique par plusieurs consommateurs (44) est mesurée au niveau d'un compteur d'électricité (13); et/ou
- **en ce que** la consommation de puissance électrique par au moins un consommateur (2 à 7) individuel est mesurée au niveau de son raccordement individuel (14 à 17, 38) ; et/ou
- **en ce que** les consommateurs (2 à 7) individuels et/ou leur raccordement sont identifiés au niveau d'un raccordement individuel (14 à 17, 38) déterminé par le biais de leur évolution caractéristique dans le temps de la consommation de puissance électrique ; et/ou
- **en ce que** le bon fonctionnement des consommateurs (2 à 7) individuels est surveillé par la comparaison de l'évolution effective dans le temps de leur consommation de puissance électrique avec la consommation caractéristique dans le temps de leur consommation de puissance électrique.

10. Procédé selon l'une des revendications précédentes, **caractérisé en ce que** la consommation de puissance électrique est mesurée avec une fréquence d'échantillonnage d'au moins 0,1 Hz, en particulier d'au moins 1 Hz, en particulier d'au moins 10 Hz ou d'au moins 100 Hz ou d'au moins 1 kHz.

11. Procédé selon l'une des revendications précédentes, **caractérisé en ce qu'**au cours de la période, l'affectation de puissance électrique aux consommateurs (2 à 7) individuels est réglée en fonction du plan avec une fréquence d'échantillonnage d'au moins 0,1 Hz, en particulier d'au moins 1 Hz ou d'au moins 10 Hz ou d'au moins 100 Hz.

12. Procédé selon l'une des revendications précédentes, **caractérisé en ce que** l'affectation de puissance électrique aux consommateurs (2 à 7) individuels comprend pour au moins un consommateur individuel
- une limitation de la puissance qu'il peut au maximum consommer et/ou
- un nivellement de la puissance qu'il consomme au cours d'au moins une période partielle de la période.

13. Procédé selon l'une des revendications précédentes, **caractérisé en ce que** l'affectation de puissance électrique aux consommateurs (2 à 7) individuels est réalisée
- pour au moins un consommateur individuel, par le biais d'un raccordement individuel commutable (14 à 17, 38) et/ou
- pour au moins un consommateur individuel, par l'activation ciblée du consommateur individuel au moyen d'un élément d'actionnement (25) pouvant être commandé monté au niveau du consommateur individuel pour un bouton de mise en marche (26) du consommateur individuel et/ou
- pour au moins un consommateur individuel, par la commande d'une interface d'une commande (27) du consommateur individuel et/ou
- à partir d'une offre triphasée, d'une façon répartie sur les trois phases de l'offre aux différents consommateurs monophasés en fonction du plan.

14. Procédé selon l'une des revendications précédentes, **caractérisé en ce que**
- d'autres propriétés électriques actuelles d'au moins un consommateur (2 à 7) individuel sont mesurées à partir de son raccordement individuel (14 à 17, 38) et/ou
- d'autres propriétés physiques actuelles d'au moins un consommateur (2 à 7) individuel sont mesurées au moyen de capteurs (23) et prises en considération lors d'actualisations du plan.

15. Dispositif destiné à optimiser une évolution dans le temps d'une consommation de puissance électrique par un groupe de consommateurs (2 à 7) différents par rapport à une offre de puissance électrique qui comprend une puissance électrique issue d'au moins un générateur d'électricité éolienne ou solaire (8) et une puissance qui peut être échangée de façon bidirectionnelle avec un accumulateur d'énergie électrique et/ou un réseau électrique public, étant entendu que le dispositif présente une commande centrale qui est configurée de telle sorte qu'elle exécute le procédé selon l'une des revendications précédentes en utilisant la consommation de dispositifs de mesure mesurant la consommation.
